# EUROPÄISCHE PATENTSCHRIFT

(11) **EP 4 175 766 B1**
(45) Veröffentlichungstag und Bekanntmachung des Hinweises auf die Patenterteilung: **29.10.2025**
(21) Anmeldenummer: 21766564.5
(22) Anmeldetag: 30.06.2021
(51) Int. Cl.: B05C 3/109, B08B 3/04, B65G 35/06, B65G 49/02, B65G 49/04, C23G 5/04

(54) **BEHANDLUNGSSTATION, BEHANDLUNGSANLAGE UND VERFAHREN ZUM BEHANDELN VON WERKSTÜCKEN**
TREATMENT STATION, TREATMENT INSTALLATION AND METHOD FOR TREATING WORKPIECES
STATION DE TRAITEMENT, INSTALLATION DE TRAITEMENT ET PROCÉDÉ DE TRAITEMENT DE PIÈCES

(30) Priorität: 01.07.2020 DE 102020208251
(43) Veröffentlichungstag der Anmeldung: 10.05.2023
(73) Patentinhaber: Dürr Systems AG, Stuttgart, 74321 Bietigheim-Bissingen (DE)
(72) Erfinder: JÄGER, Tobias, 76131 Karlsruhe (DE); LAUER, Michael, 74321 Bietigheim-Bissingen (DE); DOWNAR, Marek, 71254 Ditzingen (DE); HEINSOHN, Klaus, 71263 Weil der Stadt (DE); SEYBOTH, Oliver, 71282 Hemmingen (DE)
(74) Vertreter: DTS Patent- und Rechtsanwälte PartmbB
(86) Internationale Anmeldenummer: PCT/DE2021/100556
(87) Internationale Veröffentlichungsnummer: WO 2022/002314

(56) Entgegenhaltungen:
- DE-A1- 102006 039 715
- DE-A1- 102008 036 322
- DE-A1- 4 244 693

## Beschreibung

Die vorliegende Erfindung betrifft das Gebiet der Werkstückbehandlung, insbesondere das Reinigen und Beschichten von Werkstücken, beispielsweise Fahrzeugkarosserien oder Fahrzeugteilen.

Zum Behandeln von Werkstücken können diese beispielsweise in Tauchbecken eingetaucht werden. Die Werkstücke werden dabei beispielsweise in ein Tauchbecken abgesenkt und nach einem Behandlungsschritt aus dem Tauchbecken entnommen. Hierbei kann eine Rotation des Werkstücks für eine optimale Behandlung desselben auch an schwer zugänglichen Stellen vorgesehen sein. DE 10 2008 036322 A1 offenbart eine Behandlungsanlage mit Tauchbehandlungsanlagen. DE 42 44 693 A1, DE 10 2006 039715 A1 offenbaren Anlagen mit einem Behandlungsraum, der wahlweise flutbar oder entleerbar ist.

Bei derartigen Tauchbehandlungsanlagen kann es nachteilig sein, wenn Werkstücke unterschiedlicher Größe und/oder Form behandelt werden sollen und/oder wenn für verschiedene Werkstücke unterschiedliche Behandlungsdauern vorgesehen sind.

Der vorliegenden Erfindung liegt daher die Aufgabe zugrunde, Vorrichtungen und Verfahren bereitzustellen, welche unter Verwendung von kosteneffizienten Komponenten eine optimierte Werkstückbehandlung ermöglichen.

Diese Aufgabe wird gelöst durch die Vorrichtung und das Verfahren gemäß den unabhängigen Ansprüchen.

Die Vorrichtung ist insbesondere eine Behandlungsstation oder eine Behandlungsanlage zum Behandeln von Werkstücken.

Eine Behandlungsstation umfasst vorzugsweise einen Behandlungsbehälter, welcher einen Behandlungsraum zur Aufnahme der Werkstücke umgibt.

Ferner kann vorgesehen sein, dass eine Behandlungsstation mehrere solcher Behandlungsbehälter umfasst.

Vorzugsweise ist vorgesehen, dass der Behandlungsraum mit einem Fluid flutbar ist.

Das Fluid ist insbesondere ein Behandlungsfluid, beispielsweise ein Reinigungsfluid, insbesondere zum Entfetten der Werkstücke. Ferner kann vorgesehen sein, dass das Fluid ein Beschichtungsfluid ist, beispielsweise zum Phosphatieren oder Lackieren der Werkstücke.

Es kann vorgesehen sein, dass der Behandlungsbehälter mindestens eine Zugangsöffnung zum Einbringen der Werkstücke in den Behandlungsraum und/oder zum Ausbringen der Werkstücke aus dem Behandlungsraum umfasst.

Vorzugsweise umfasst der Behandlungsbehälter eine Verschließvorrichtung zum wahlweisen Verschließen und Freigeben der mindestens einen Zugangsöffnung.

Es kann vorgesehen sein, dass der Behandlungsbehälter eine einzige Zugangsöffnung zum Einbringen der Werkstücke in den Behandlungsraum und zum Ausbringen der Werkstücke aus dem Behandlungsraum umfasst.

Alternativ hierzu kann vorgesehen sein, dass der Behandlungsbehälter eine Zugangsöffnung zum Einbringen der Werkstücke in den Behandlungsraum und eine weitere Zugangsöffnung zum Ausbringen der Werkstücke aus dem Behandlungsraum umfasst, wobei die Zugangsöffnungen dann insbesondere an einander gegenüberliegenden Seiten oder Enden oder Stirnwänden des Behandlungsbehälters angeordnet sind.

Vorteilhaft kann es sein, wenn mindestens eine Zugangsöffnung in einer oder mehreren Seitenwänden des Behandlungsbehälters, insbesondere in einer oder mehreren Stirnwänden des Behandlungsbehälters, angeordnet und/oder ausgebildet ist.

Der Behandlungsbehälter ist insbesondere im Wesentlichen quaderförmig ausgebildet und umfasst vorzugsweise eine beispielsweise geschlossene Deckenwand, eine Bodenwand, zwei oder drei geschlossene Seitenwände und zwei weitere bzw. eine weitere Seitenwand, welche mit mindestens einer Zugangsöffnung versehen ist, wobei die mindestens eine Zugangsöffnung mittels der Verschließvorrichtung vorzugsweise vollständig verschließbar ist.

Günstig kann es sein, wenn die Verschließvorrichtung zum fluiddichten Verschließen der mindestens einen Zugangsöffnung dient.

Die Verschließvorrichtung umfasst hierzu insbesondere ein Verschließelement, welches beispielsweise selbsthemmend ausgebildet und/oder mit einer selbsthemmenden Verriegelung und/oder mit einer selbsthemmenden Abdichtung versehen ist.

Ferner kann vorgesehen sein, dass zur Sicherstellung der Dichtwirkung der Verschließvorrichtung mindestens ein Kniehebel eingesetzt oder einsetzbar ist, insbesondere um ein Verschließelement an eine Dichtvorrichtung anzupressen.

Vorteilhaft kann es sein, wenn die Verschließvorrichtung eine Hubvorrichtung zum Anheben und Absenken eines Verschließelements der Verschließvorrichtung umfasst, insbesondere zum Anheben des Verschließelements, um dieses in eine Offenstellung zu bringen, und/oder zum Absenken des Verschließelements, um dieses in eine Schließstellung zu bringen.

Ferner kann vorgesehen sein, dass das Verschließelement mittels der Hubvorrichtung absenkbar ist, um dieses in eine Offenstellung zu bringen, und/oder anhebbar ist, um dieses in eine Schließstellung zu bringen.

Ein solches Verschließelement kann beispielsweise ein Tor, insbesondere ein Schleusentor, sein.

Das Verschließelement kann beispielsweise einteilig ausgebildet und als Ganzes bewegbar sein. Alternativ hierzu kann vorgesehen sein, dass das Verschließelement mehrteilig ausgebildet ist, wobei die Teile des Verschließelements vorzugsweise unabhängig voneinander bewegbar sind oder voneinander verschiedene Bewegungen ausführen, um die Zugangsöffnung zu verschließen oder freizugeben.

Alternativ oder ergänzend kann vorgesehen sein, dass die Verschließvorrichtung eine Schiebevorrichtung zum beispielsweise seitlichen Verschieben des Verschließelements umfasst, um dieses wahlweise in eine Offenstellung oder in eine Schließstellung zu bringen.

Ferner kann vorgesehen sein, dass die Verschließvorrichtung eine Schwenkvorrichtung zum Verschwenken eines Verschließelements der Verschließvorrichtung umfasst, wobei das Verschließelement insbesondere um eine zumindest näherungsweise horizontale Schwenkachse verschwenkbar ist. Alternativ hierzu kann vorgesehen sein, dass das Verschließelement um eine zumindest näherungsweise vertikale Schwenkachse verschwenkbar ist.

Vorteilhaft kann es sein, wenn ein oder mehrere Verschließelemente, insbesondere mindestens ein Klappelement, ein oder mehrere Förderelemente einer Fördervorrichtung, insbesondere ein oder mehrere Führungselemente einer Führungsvorrichtung einer Fördervorrichtung, umfassen oder bilden. Insbesondere kann vorgesehen sein, dass ein oder mehrere Rollenelemente einer als Rollenbahnförderer ausgebildeten Fördervorrichtung an einem oder mehreren Verschließelemente angeordnet sind.

Es kann vorteilhaft sein, wenn ein oder mehrere Verschließelemente der Verschließvorrichtung einen Teil der Fördervorrichtung bilden oder einen Teil der Fördervorrichtung tragen oder aufnehmen.

Die Verschließvorrichtung umfasst vorzugsweise einen Verschließantrieb zum automatischen Bewegen eines Verschließelements der Verschließvorrichtung, insbesondere um das Verschließelement automatisch in die Offenstellung und/oder in die Schließstellung zu bringen.

Der Verschließantrieb kann beispielsweise elektrisch oder pneumatisch oder hydraulisch auf das Verschließelement einwirken, um dieses wahlweise in eine Offenstellung oder in eine Schließstellung zu bringen. Hierbei können beispielsweise ein oder mehrere Elektromotoren und/oder Spindelgetriebe und/oder Schubketten und/oder Seilwinden zum Bewegen des Verschließelements vorgesehen sein.

Ferner kann vorgesehen sein, dass die Schwerkraft zum Bewegen des Verschließelements genutzt wird, beispielsweise durch mechanische Kopplung zweier Verschließelemente, wobei ein Verschließelement abgesenkt wird und dadurch ein weiteres Verschließelement angehoben oder zumindest dessen Anhebung vereinfacht wird.

Günstig kann es sein, wenn die Behandlungsstation einen Fluidtank zur Aufnahme eines Fluids, insbesondere eines Behandlungsfluids, umfasst.

Das Fluid ist vorzugsweise zum Fluten des Behandlungsraums mittels einer Fluidführung aus dem Fluidtank in den Behandlungsraum einbringbar.

Zum Entleeren des Behandlungsraums ist das Fluid vorzugsweise mittels der Fluidführung aus dem Behandlungsraum zurück in den Fluidtank führbar.

Sowohl zum Fluten als auch zum Entleeren kann dabei eine direkte Verbindung zwischen dem Behandlungsraum und dem Fluidtank vorgesehen sein. Alternativ hierzu können eine oder mehrere Zwischenstationen oder sonstige, zu durchströmende Vorrichtungen vorgesehen sein.

Die Behandlungsstation umfasst vorzugsweise eine Fördervorrichtung zum Fördern der Werkstücke, insbesondere zum Einbringen der Werkstücke in den Behandlungsraum und/oder zum Ausbringen der Werkstücke aus dem Behandlungsraum und/oder zum Fördern der Werkstücke von einer Behandlungsstation zur nächsten.

Günstig kann es sein, wenn die Fördervorrichtung einen oder mehrere Rollenbahnförderer, Hebeförderer, Schiebeförderer und/oder Regalbediengeräte zum Fördern und/oder Bewegen der Werkstücke umfasst, insbesondere zum Einbringen der Werkstücke in den Behandlungsraum und/oder zum Ausbringen der Werkstücke aus dem Behandlungsraum und/oder zum Fördern der Werkstücke von einer Behandlungsstation zur nächsten.

Alternativ oder ergänzend hierzu kann vorgesehen sein, dass die Fördervorrichtung ein oder mehrere fahrerlose Transportsysteme zum Fördern und/oder Bewegen der Werkstücke umfasst, insbesondere zum Einbringen der Werkstücke in den Behandlungsraum und/oder zum Ausbringen der Werkstücke aus dem Behandlungsraum und/oder zum Fördern der Werkstücke von einer Behandlungsstation zur nächsten.

Bei einer Ausgestaltung der Erfindung kann vorgesehen sein, dass die Fördervorrichtung mehrere Fördervorrichtungsabschnitte mit hinsichtlich einer Antriebsvorrichtung und/oder hinsichtlich einer Aufnahme und Führung der Werkstücke voneinander verschiedenen Fördertechnik umfasst, wobei die Werkstücke vorzugsweise mittels eines ersten Fördervorrichtungsabschnitts in einen Bereich vor einem Behandlungsbehälter einer Behandlungsstation förderbar sind und wobei die Werkstücke mittels eines hiervon verschiedenen zweiten Fördervorrichtungsabschnitts in den Behandlungsraum der Behandlungsstation einbringbar sind.

Beispielsweise kann es vorgesehen sein, dass außerhalb der Behandlungsräume ein oder mehrere Rollenbahnförderer zum Fördern der Werkstücke vorgesehen sind und dass die Werkstücke mittels eines oder mehrerer Schiebeförderer in die Behandlungsräume einschiebbar und/oder aus denselben herausschiebbar oder herausziehbar sind.

Günstig kann es sein, wenn ein oder mehrere Werkstücke auf einem Werkstückträger angeordnet sind. Ein Werkstückträger ist insbesondere ein Skid, vorzugsweise zur Aufnahme eines als Fahrzeugkarosserie ausgebildeten Werkstücks.

Das Fördern und/oder Bewegen der Werkstücke erfolgt dann vorzugsweise gemeinsam mit dem Werkstückträger, so dass unter der Formulierung "Fördern der Werkstücke" oder "Bewegen der Werkstücke" auch ein Fördern oder Bewegen mindestens eines Werkstückträgers samt mindestens eines daran angeordneten Werkstücks zu verstehen sein kann.

Bei einer Ausgestaltung der Erfindung kann vorgesehen sein, dass die Werkstücke durch eine gesamte Behandlungseinheit der Behandlungsanlage hindurch an dem Werkstückträger angeordnet, insbesondere festgelegt, sind.

Alternativ hierzu kann vorgesehen sein, dass die Werkstücke ohne einen Werkstückträger durch eine gesamte Behandlungseinheit der Behandlungsanlage hindurchgefördert werden. Die Werkstücke sind dann insbesondere in den Behandlungsräumen an hierfür vorgesehene stationäre Werkstückaufnahmen übergebbar oder auf denselben ablegbar und/oder daran festlegbar.

Die Werkstücke sind vorzugsweise mittels der Fördervorrichtung längs einer horizontalen Ebene bewegbar, insbesondere in den Behandlungsraum einbringbar und/oder aus dem Behandlungsraum ausbringbar.

Insbesondere kann es vorgesehen sein, dass die Werkstücke mittels der Fördervorrichtung ebenerdig bewegbar, insbesondere in den Behandlungsraum einbringbar und/oder aus dem Behandlungsraum ausbringbar, sind.

Günstig kann es sein, wenn die Fördervorrichtung eine oder mehrere Antriebseinheiten zum Bewegen der Werkstücke umfasst, wobei die Antriebseinheiten, insbesondere sämtliche Antriebseinheiten der Fördervorrichtung, vorzugsweise außerhalb des Behandlungsraums angeordnet sind, zumindest während der Durchführung eines Behandlungsschritts (Werkstückbehandlung).

Vorteilhaft kann es sein, wenn die Fördervorrichtung eine Führungsvorrichtung zur lasttragenden Aufnahme der Werkstücke umfasst, wobei die Führungsvorrichtung sich von außerhalb des Behandlungsraums bis in den Behandlungsraum hinein erstreckt, insbesondere durch mindestens eine Zugangsöffnung hindurch.

Die Führungsvorrichtung ist dabei vorzugsweise zumindest abschnittsweise innerhalb des Behandlungsraums angeordnet, selbst dann, wenn ein Behandlungsschritt (Werkstückbehandlung) durchgeführt wird.

Ferner kann vorgesehen sein, dass die Fördervorrichtung eine Führungsvorrichtung zur lasttragenden Aufnahme der Werkstücke umfasst, wobei die Führungsvorrichtung sowohl mindestens einen außerhalb des Behandlungsraums angeordneten Führungsstreckenabschnitt als auch mindestens einen innerhalb des Behandlungsraums angeordneten Führungsstreckenabschnitt umfasst, wobei die Werkstücke durch die Zugangsöffnung hindurch von einem außerhalb des Behandlungsraums angeordneten Führungsstreckenabschnitt auf einen innerhalb des Behandlungsraums angeordneten Führungsstreckenabschnitt übergebbar sind, insbesondere durch Antreiben der Werkstücke mittels einer oder mehrerer Antriebseinheiten.

Eine Antriebseinheit kann beispielsweise eine Schiebevorrichtung oder eine Greifvorrichtung oder eine Rollenvorrichtung sein.

Vorzugsweise sind die Werkstücke mittels derselben Antriebseinheit oder einer verschiedenen Antriebseinheit nach der Durchführung eines Behandlungsschritts aus dem Behandlungsraum ausbringbar (entfernbar).

Bei einer Ausgestaltung der Erfindung kann vorgesehen sein, dass die Fördervorrichtung eine oder mehrere Antriebseinheiten umfasst, welche von außerhalb des Behandlungsraums auf einen Führungsstreckenabschnitt der Fördervorrichtung einwirken. Eine Antriebseinheit kann beispielsweise ein Elektromotor sein oder einen Elektromotor umfassen.

Die eine oder die mehreren Antriebseinheiten sind vorzugsweise rein mechanisch mit dem Führungsstreckenabschnitt gekoppelt. Insbesondere kann vorgesehen sein, dass eine Kopplungsvorrichtung eine mechanische Verbindung zwischen der einen oder den mehreren Antriebseinheiten einerseits und dem Führungsstreckenabschnitt der Fördervorrichtung andererseits herstellt. Mittels der außerhalb des Behandlungsraums angeordneten einen oder mehreren Antriebseinheiten ist dann insbesondere ein innerhalb des Behandlungsraums auf dem Führungsstreckenabschnitt geführtes Werkstück antreibbar, vorzugsweise linear verfahrbar.

Günstig kann es sein, wenn die eine oder die mehreren Antriebseinheiten oberhalb eines maximalen Füllpegels oder oberhalb einer maximalen Füllhöhe des Behandlungsraums und/oder an einer Außenseite einer Seitenwandung eines den Behandlungsraum umgebenden Behandlungsbehälters angeordnet sind.

Vorzugsweise sind eine oder mehrere Antriebseinheiten an einem einer Zugangsöffnung des Behandlungsbehälters abgewandten Endbereich des Behandlungsbehälters und/oder in einem deckennahen Bereich einer Seitenwandung des Behandlungsbehälters angeordnet.

Die Kopplungsvorrichtung ist vorzugsweise durch die Seitenwandung hindurchgeführt, vorzugsweise auf der Höhe der einen oder der mehreren Antriebseinheiten. Eine Durchführungsöffnung zur Durchführung der Kopplungsvorrichtung ist vorzugsweise oberhalb eines maximalen Füllpegels oder einer maximalen Füllhöhe des Behandlungsraums angeordnet und/oder ausgebildet. Ein durch die Seitenwandung hindurchgeführtes Koppelelement der Kopplungsvorrichtung ist vorzugsweise eine Drehwelle oder Koppelwelle.

Die Drehwelle oder Koppelwelle ist vorzugsweise mittels eines Zugelements, insbesondere mittels eines Riemens und/oder einer Kette, beispielsweise einer Duplexkette, mit einer weiteren Drehwelle oder Koppelwelle verbunden, welche im Bereich des Führungsstreckenabschnitts angeordnet ist und letztlich direkt oder indirekt auf das Werkstück wirkt, um dasselbe zu bewegen.

Alternativ oder ergänzend kann bei einer Ausgestaltung der Erfindung vorgesehen sein, dass die Behandlungsstation eine oder mehrere Sensorvorrichtungen umfasst, welche eine Zustands- und/oder Positionserfassung innerhalb des Behandlungsraums von außerhalb des Behandlungsraums ermöglichen. Beispielsweis kann mittels einer Sensorvorrichtung eine korrekte Positionierung eines Werkstücks innerhalb des Behandlungsraums ermittelt oder überwacht werden.

Die eine oder die mehreren Sensorvorrichtungen umfassen vorzugsweise jeweils ein oder mehrere außerhalb des Behandlungsraums angeordnete Sensorelemente, welche vorzugsweise rein mechanisch mit einem oder mehreren Geberelementen innerhalb des Behandlungsraums gekoppelt sind. Insbesondere kann vorgesehen sein, dass eine Kopplungsvorrichtung eine mechanische Verbindung zwischen dem einen oder den mehreren Sensorelementen einerseits und dem einen oder den mehreren Geberelementen andererseits herstellt. Mittels des einen oder der mehreren außerhalb des Behandlungsraums angeordneten Sensorelemente ist dann insbesondere ein innerhalb des Behandlungsraums angeordnetes Werkstück detektierbar, vorzugsweise dessen Position ermittelbar oder überwachbar.

Günstig kann es sein, wenn die eine oder die mehreren Sensorelemente oberhalb eines maximalen Füllpegels oder oberhalb einer maximalen Füllhöhe des Behandlungsraums und/oder an einer Außenseite einer Seitenwandung eines den Behandlungsraum umgebenden Behandlungsbehälters angeordnet sind.

Vorzugsweise sind ein oder mehrere Sensorelemente in einem deckennahen Bereich einer Seitenwandung des Behandlungsbehälters angeordnet.

Die Kopplungsvorrichtung ist vorzugsweise durch die Seitenwandung hindurchgeführt, vorzugsweise auf der Höhe der einen oder der mehreren Sensorelemente. Eine Durchführungsöffnung zur Durchführung der Kopplungsvorrichtung ist dabei vorzugsweise oberhalb eines maximalen Füllpegels oder einer maximalen Füllhöhe des Behandlungsraums angeordnet und/oder ausgebildet. Ein durch die Seitenwandung hindurchgeführtes Koppelelement der Kopplungsvorrichtung ist vorzugsweise eine Drehwelle oder Koppelwelle.

Die Drehwelle oder Koppelwelle ist vorzugsweise mittels eines Zugelements oder Druckelements, insbesondere mittels einer Koppelstange, mit einer weiteren Drehwelle oder Koppelwelle verbunden, welche beispielsweise in einem Bodenbereich und/oder im Bereich eines Führungsstreckenabschnitts angeordnet ist und mit einem Geberelement verbunden ist. Durch Betätigen des Geberelements, beispielsweise durch Drehen des Geberelements, kann vorzugsweise eine Rotation der weiteren Drehwelle oder Koppelwelle, dadurch eine beispielsweise vertikale Verschiebung der Koppelstange und hierdurch eine Rotation der (oberen) Drehwelle oder Koppelwelle bewirkt werden, wobei die aus dem Behandlungsraum herausgeführte (obere) Drehwelle oder Koppelwelle schließlich eine Bewegung ausführt oder bewirkt, welche mittels des mindestens einen Sensorelements erfassbar ist. Durch rein mechanische Betätigung der Kopplungsvorrichtung kann somit eine Veränderung der Ausrichtung oder eine sonstige Bewegung des Geberelements mittels des einen oder der mehreren Sensorelemente detektiert werden.

Günstig kann es sein, wenn sämtliche im Betrieb der Behandlungsstation mit Fluid, insbesondere Behandlungsfluid, in Kontakt kommende Lagerstellen als schmierfreie und/oder graphitfreie Bauteile ausgebildet sind oder ausschließlich schmierfreie und/oder graphitfreie Bauteile umfassen. Insbesondere sind vorzugsweise sämtliche Gleitlager und/oder Wälzlager schmierfrei und/oder graphitfrei ausgeführt.

Bei einer Ausgestaltung der Erfindung kann vorgesehen sein, dass sämtliche im Betrieb der Behandlungsstation mit Fluid, insbesondere Behandlungsfluid, in Kontakt kommende Lagerstellen als Bronze-Sinter-Buchsen und/oder als Kunststoffelemente ausgebildet sind oder Bronze-Sinter-Buchsen und/oder Kunststoffelemente umfassen.

Vorzugsweise sind sämtliche im Betrieb der Behandlungsstation mit Fluid, insbesondere Behandlungsfluid, in Kontakt kommende Komponenten auf einen dauerhaften Verbleib und/oder Kontakt mit dem Fluid ausgelegt, beispielsweise durch die Wahl von rostfreiem Edelstahl als Werkstoff, insbesondere V4A.

Innerhalb des Behandlungsraums, insbesondere innerhalb eines Innenraums des Behandlungsbehälters, sind vorzugsweise keine elektrischen Komponenten angeordnet.

Vorteilhaft kann es sein, wenn die Fördervorrichtung zum Fördern von Werkstücken offen ausgebildet und/oder auf Abdeckelemente zum zumindest teilweisen Abdecken von Komponenten der Fördervorrichtung zumindest innerhalb des Behandlungsraums verzichtet wird. Hierdurch kann ein einfaches Durchströmen und/oder Durchspülen der Fördervorrichtung ermöglicht werden. Zudem wird hierdurch die Zugänglichkeit vorzugsweise optimiert.

Die Fördervorrichtung umfasst vorzugsweise eine Arretiervorrichtung zum Arretieren der Werkstücke in einer Behandlungsposition innerhalb des Behandlungsraums.

Mittels der Arretiervorrichtung ist insbesondere eine Bewegung des Werkstücks entgegen der Schwerkraftrichtung blockierbar.

Durch die Verwendung einer solchen Arretiervorrichtung kann vorzugsweise vermieden werden, dass die Werkstücke beim Fluten des Behandlungsraums aufschwimmen oder anderweitig bewegt oder angehoben werden.

Die Arretiervorrichtung kann beispielsweise eine oder mehrere Verriegelungselemente oder Klappelemente oder Halteelemente umfassen, welche unmittelbar an einem oder mehreren Werkstücken oder aber an einem oder mehreren Werkstückträgern zur Aufnahme eines oder mehrerer Werkstücke angreifen.

Das eine oder die mehreren Werkstücke sind vorzugsweise außerhalb des Behandlungsraums und/oder vor einem Einbringen in den Behandlungsraum an einem oder mehreren Werkstückträgern festlegbar, insbesondere gegen ein Verschieben und/oder Anheben sicherbar. Alternativ oder ergänzend hierzu kann vorgesehen sein, dass das eine oder die mehreren Werkstücke innerhalb des Behandlungsraums und/oder gemeinsam mit einem oder mehreren Werkstückträgern fixiert, insbesondere relativ zueinander und/oder relativ zu dem Behandlungsraum festgelegt, werden.

Alternativ oder ergänzend hierzu kann vorgesehen sein, dass eine Arretierung dadurch erfolgt, dass das mindestens eine Werkstück oder ein Werkstückträger zur Aufnahme des mindestens einen Werkstücks in eine zumindest abschnittsweise komplementär hierzu ausgebildete Arretieraufnahme hineingefördert wird, insbesondere beim Einbringen des mindestens einen Werkstücks und gegebenenfalls des Werkstückträgers in den Behandlungsraum.

Vorteilhaft kann es ferner sein, wenn die Fördervorrichtung eine Bewegungsvorrichtung zum Kippen und/oder Drehen der Werkstücke umfasst, insbesondere zur temporären Lageveränderung relativ zu einer zumindest näherungsweise horizontalen Normallage.

Die horizontale Normallage ist insbesondere eine Standardausrichtung der Werkstücke während der Förderung und/oder Behandlung derselben. Mittels der Bewegungsvorrichtung ist vorzugsweise ein Kippvorgang und/oder ein Drehvorgang durchführbar, wodurch insbesondere ein effizienterer Ablauf von Fluid von den Werkstücken erzielbar sein kann.

Die Behandlungsstation kann insbesondere Bestandteil einer Behandlungsanlage, beispielsweise einer Lackieranlage sein.

Mittels der Behandlungsstation ist insbesondere ein Verfahren zum Behandeln von Werkstücken durchführbar. Das Verfahren umfasst dabei vorzugsweise folgende Schritte:
Einbringen eines Werkstücks durch eine Zugangsöffnung eines Behandlungsbehälters in einen Behandlungsraum des Behandlungsbehälters;
Verschließen der Zugangsöffnung des Behandlungsbehälters mittels einer Verschließvorrichtung;
Fluten des Behandlungsraums mit einem Fluid zur Durchführung einer Werkstückbehandlung.

Nach der Durchführung der Werkstückbehandlung (Behandlungsschritt) wird vorzugsweise das Fluid aus dem Behandlungsraum entfernt, insbesondere abgelassen.

Ferner wird dann vorzugsweise das Werkstück durch die eine Zugangsöffnung oder eine weitere Zugangsöffnung aus dem Behandlungsraum entnommen.

Bei einer Ausgestaltung der Erfindung kann vorgesehen sein, dass die Behandlungsstation ein oder mehrere in dem Behandlungsraum angeordnete oder anordenbare Einbauelemente zum Unterstützen eines Flutvorgangs umfasst.

Solche Einbauelemente sind insbesondere von einer Fördervorrichtung zum Fördern der Werkstücke verschiedene Komponenten.

Vorzugsweise weisen diese Einbauelemente außer dem Unterstützen des Flutvorgangs keine weitere technische Wirkung auf oder dienen keinem weiteren Zweck. Es kann jedoch alternativ hierzu auch vorgesehen sein, dass ein oder mehrere Einbauelemente der Aufnahme von Funktionskomponenten der Behandlungsstation dienen, beispielsweise Vorrichtungen zur Fluidverteilung im Behandlungsraum, Messeinrichtungen oder sonstige Sensoreinrichtungen, etc.

Mittels der Einbauelemente ist der Flutvorgang vorzugsweise hinsichtlich des zeitlichen Ablaufs und/oder der Optimierung eines Behandlungsschritts zum Behandeln der Werkstücke unterstützbar.

Günstig kann es sein, wenn eine Strömung innerhalb des Behandlungsraums erzeugt und/oder optimiert wird, beispielsweise mittels eines oder mehrerer Einbauelemente und/oder mittels einer oder mehrere Zuleitungen und/oder mittels einer oder mehrerer Ableitungen und/oder mittels einer oder mehrerer Pumpvorrichtungen.

Günstig kann es sein, wenn im Behandlungsraum eine oder mehrere Düsen zur Zuführung und/oder Umwälzung von Fluid angeordnet sind, wobei das Fluid insbesondere auf Bereiche des Werkstücks oder der Werkstücke gerichtet ist, welche einer zusätzlichen Behandlung bedürfen und/oder in welchen sich beim Fluten Gasansammlungen, beispielsweise Luftblasen, bilden können. Mittels der einen oder der mehreren Düsen ist vorzugsweise das Fluid derart applizierbar, dass Gasansammlungen, beispielsweise Luftblasen, ausgetrieben werden.

Alternativ oder ergänzend hierzu kann vorgesehen sein, dass mittels der Fördervorrichtung und/oder mittels zusätzlich oder alternativ zur Fördervorrichtung vorgesehener Bewegungskomponenten eine Hub- und/oder Senkbewegung und/oder Kippbewegung und/oder Drehbewegung des mindestens einen zu behandelnden Werkstücks durchführbar ist, insbesondere um Gasansammlungen, beispielsweise Luftblasen, auszutreiben.

Bei einer Ausgestaltung der Erfindung kann vorgesehen sein, dass ein oder mehrere Einbauelemente als Verdrängungselemente ausgebildet sind, mittels welcher insbesondere Freiräume innerhalb des Behandlungsraums füllbar sind, welche während des Flutvorgangs ohne das jeweilige Einbauelement freibleiben und daher mit Fluid zu füllen wären.

Mittels eines oder mehrerer als Verdrängungselemente ausgebildeter Einbauelemente kann somit insbesondere das für die Durchführung des Flutvorgangs erforderliche Fluidvolumen reduziert werden, insbesondere um mindestens ungefähr 5 %, vorzugsweise mindestens ungefähr 10 %, beispielsweise mindestens ungefähr 20 %, eines insgesamt für die Durchführung eines Flutvorgangs erforderlichen Fluidvolumens. Ferner kann hierdurch vorzugsweise eine Gesamtdauer für die Durchführung des Flutvorgangs reduziert werden.

Vorteilhaft kann es sein, wenn ein oder mehrere Einbauelemente hinsichtlich ihrer Position und/oder hinsichtlich ihrer Funktion und/oder hinsichtlich ihrer Form an die zu behandelnden Werkstücke angepasst oder anpassbar sind.

Beispielsweise kann vorgesehen sein, dass ein oder mehrere Verdrängungselemente zumindest abschnittsweise oder bereichsweise an eine Form des zu behandelnden Werkstücks angepasst oder anpassbar sind. Insbesondere kann vorgesehen sein, dass ein oder mehrere Verdrängungselemente zumindest abschnittsweise und/oder zumindest näherungsweise komplementär zu einer Werkstückform ausgebildet sind, so dass die Freiräume innerhalb des Behandlungsraums vorzugsweise minimierbar sind.

Beispielsweise kann vorgesehen sein, dass ein oder mehrere Verdrängungselemente an Seitenwandungen und/oder Bodenbereiche und/oder einen Fronthaubenbereich und/oder einen Heckhaubenbereich von als Fahrzeugkarosserien ausgebildeten Werkstücken angepasst ausgebildet sind.

Ferner kann vorgesehen sein, dass ein oder mehrere Einbauelemente derart angeordnet und/oder bewegbar sind, dass diese während der Behandlung eines Werkstücks in einen Innenraum desselben hineinragen oder zumindest teilweise darin angeordnet sind, insbesondere ohne das Werkstück zu berühren. Beispielsweise können bei Werkstücken, welche als Fahrzeugkarosserien von Transportern oder (Klein-)Bussen, etc. ausgebildet sind, durch eine Heckklappe ein oder mehrere Einbauelemente in den Innenraum des jeweiligen Werkstücks eingebracht werden, um ein freies Innenraumvolumen und somit das für einen Flutvorgang erforderliche Fluidvolumen zu reduzieren.

Es kann vorgesehen sein, dass ein oder mehrere Verdrängungselemente einen Hohlkörper aufweisen, welcher vorzugsweise unabhängig von dem Flutvorgang füllbar und/oder gefüllt haltbar und/oder entleerbar ist.

Insbesondere sind ein oder mehrere Verdrängungselemente als Hohlkörper ausgebildet und weisen eine oder mehrere verschließbare Befüllöffnungen und/oder eine oder mehrere Ablassöffnungen auf.

Derartige Verdrängungselemente können insbesondere für sich genommen sehr leicht ausgebildet und somit einfach in dem Behandlungsraum angeordnet werden. Ein unerwünschtes Aufschwimmen oder sonstiges Bewegen der Verdrängungselemente bei einem Flutvorgang wird vorzugsweise durch geeignete Festlegung der Verdrängungselemente innerhalb des Behandlungsbehälters und/oder durch Beschweren derselben, beispielsweise Füllen des Hohlkörpers, verhindert. Zum Befüllen des einen oder der mehreren Verdrängungselemente kann beispielsweise ein von dem Fluid zur Durchführung der Werkstückbehandlung verschiedenes Fluid oder aber dasselbe Fluid verwendet werden. Ferner kann Wasser als Füllfluid für das eine oder die mehreren Verdrängungselemente vorgesehen sein.

Vorteilhaft kann es sein, wenn eine innere und eine äußere Geometrie eines oder mehrerer Verdrängungselemente voneinander abweichen, so dass beispielsweise zum Befüllen und Entleeren optimierte Hohlräume innerhalb eines oder mehrerer Verdrängungselemente gebildet sind.

Bei einer Ausgestaltung der Erfindung kann vorgesehen sein, dass der Behandlungsbehälter eine oder mehrere Aufnahmen zur Festlegung eines oder mehrerer Einbauelemente, insbesondere Verdrängungselemente, umfasst.

Ein oder mehrere Einbauelemente, beispielsweise Verdrängungselemente, insbesondere Verdrängungselemente mit unterschiedlichen Formen und/oder Dimensionen, weisen vorzugsweise komplementär zu den Aufnahmen ausgebildete Festlegungsabschnitte auf, so dass diese vorzugsweise einfach festlegbar und/oder austauschbar sind.

Es kann vorgesehen sein, dass ein oder mehrere Verdrängungselemente starr ausgebildet sind.

Ein oder mehrere Einbauelemente, insbesondere Verdrängungselemente, sind vorzugsweise formschlüssig und/oder kraftschlüssig und/oder lösbar an und/oder in dem Behandlungsbehälter festgelegt oder festlegbar.

Günstig kann es sein, wenn ein oder mehrere Verdrängungselemente flexibel und/oder formveränderbar und/oder größenveränderbar, beispielsweise aufpumpbar, ausgebildet sind.

Hierdurch können das eine oder die mehreren Verdrängungselemente insbesondere an unterschiedliche Werkstückarten angepasst werden, um den jeweiligen Behandlungsschritt und/oder Flutvorgang zu optimieren.

Die Behandlungsstation umfasst vorzugsweise eine Variationsvorrichtung zur Variation der Form und/oder Größe des einen oder der mehreren Verdrängungselemente, insbesondere zur Reduktion eines für einen Behandlungsvorgang zu flutenden Freiraums innerhalb des Behandlungsraums.

Eine Variationsvorrichtung kann beispielsweise eine Pumpvorrichtung sein, mittels welcher einem Hohlraum innerhalb des einen oder der mehreren Verdrängungselemente zur Optimierung des Flutvorgangs Füllfluid zuführbar ist, wobei insbesondere eine Steuerung und/oder Regelung derart vorgesehen ist, dass eine Menge des zugeführten Füllfluids abhängig vom jeweils zu behandelnden Werkstück gewählt wird, insbesondere automatisch mittels einer geeignet ausgebildeten und eingerichteten Steuervorrichtung.

Es kann vorgesehen sein, dass ein oder mehrere Verdrängungselemente einen oder mehrere Freiräume im Bereich einer Fördervorrichtung der Behandlungsstation ausfüllen.

Alternativ oder ergänzend hierzu kann vorgesehen sein, dass ein oder mehrere Verdrängungselemente einen Freiraum über einem als Fahrzeugkarosserie ausgebildeten Werkstück, insbesondere über einer Fahrzeugfront und/oder über einem Fahrzeugheck der Fahrzeugkarosserie, ausfüllen.

Bei einer weiteren ergänzenden oder alternativen Ausführungsform kann vorgesehen sein, dass ein oder mehrere Einbauelemente als Stützelemente zum Abstützen eines zu behandelnden Werkstücks während des Flutvorgangs ausgebildet sind.

Das eine oder die mehreren Stützelemente liegen somit vorzugsweise während des Flutvorgangs an dem Werkstück an und verhindern vorzugsweise ein Ausbeulen oder Knicken oder eine sonstige Verformung des jeweiligen Werkstücks. Das eine oder die mehreren Stützelemente sind hierfür vorzugsweise bewegbar und/oder formveränderbar und/oder größenveränderbar.

Insbesondere können ein oder mehrere als Verdrängungselemente ausgebildete Einbauelemente zugleich als Stützelemente dienen.

Zur Durchführung eines Behandlungsschritts und/oder nach erfolgtem Fluten des Behandlungsraums werden das eine oder die mehreren Stützelemente vorzugsweise von dem Werkstück entfernt, insbesondere um eine vollständige Benetzung des Werkstücks mit dem Fluid, insbesondere dem Behandlungsfluid, zu gewährleisten. Hierfür können das eine oder die mehreren Stützelemente insbesondere von dem Werkstück wegbewegt werden. Alternativ oder ergänzend hierzu kann das Entfernen durch Verändern der Form und/oder Größe des Stützelements realisiert werden.

Günstig kann es sein, wenn eines oder mehrere der Stützelemente jeweils einen Abstützabschnitt aufweisen, welcher der unmittelbaren Anlage an dem Werkstück zum Abstützen desselben dient.

Ein Abstützabschnitt ist insbesondere mit einem Beschädigungen am Werkstück vermeidenden Material versehen und/oder elastisch nachgiebig ausgebildet. Beispielsweise kann eine textile Oberfläche des Abstützabschnitts vorgesehen sein.

Bei einer Weiterbildung der Erfindung kann vorgesehen sein, dass ein oder mehrere Einbauelemente als Temperierelemente zum Temperieren des Behandlungsbehälters und/oder des Fluids ausgebildet sind.

Das eine oder die mehreren Einbauelemente sind hierfür insbesondere mit einem Heizmedium oder Kühlmedium befüllt oder füllbar, insbesondere durchströmbar.

Günstig kann es sein, wenn das eine oder die mehreren Einbauelemente, welche als Temperierelemente ausgebildet sind, eine oder mehrere Rippen oder sonstige Oberflächenvergrößerungen aufweisen, um eine Wärmeübertragung zu optimieren.

Günstig kann es sein, wenn ein oder mehrere als Temperierelemente ausgebildete Einbauelemente beim Fluten des Behandlungsraums mit dem Fluid überströmt werden. Auch hierdurch kann eine Wärmeübertragung vorzugsweise optimiert werden.

Insbesondere zur variablen Anpassung der Behandlungsstation an unterschiedlich dimensionierte Werkstücke kann es vorgesehen sein, dass ein oder mehrere Einbauelemente temporär für einen oder mehrere Behandlungsvorgänge und/oder Flutvorgänge oder aber permanent in dem Behandlungsraum angeordnet oder anordenbar sind.

Insbesondere kann vorgesehen sein, dass die Behandlungsstation ein Set von unterschiedlich dimensionierten Einbauelementen umfasst, wobei nach Bedarf einzelne der Einbauelemente, insbesondere an bestimmte Werkstückarten angepasste Einbauelemente, in den Behandlungsraum eingebracht und darin festgelegt werden. Bei einem Wechsel der Werkstückart werden die Einbauelemente dann vorzugsweise gegen anders dimensionierte oder hinsichtlich ihrer Funktion andere Einbauelemente ausgetauscht.

Es kann vorgesehen sein, dass ein oder mehrere Einbauelemente während des Flutvorgangs, während des Behandlungsvorgangs und/oder während des Entleerens des Behandlungsraums unbeweglich in dem Behandlungsraum festgelegt sind.

Alternativ hierzu kann vorgesehen sein, dass ein oder mehrere Einbauelemente innerhalb des Behandlungsraums beweglich sind, beispielsweise während des Flutvorgangs in einen zu flutenden Freiraum des Behandlungsraums einbringbar und/oder nach Durchführung des Flutvorgangs und/oder des Behandlungsvorgangs (Behandlungsschritts) insbesondere automatisch aus dem zu flutenden Freiraum entfernbar.

Es kann vorgesehen sein, dass ein oder mehrere Einbauelemente an einem Verschließelement zum Verschließen einer Zugangsöffnung des Behandlungsbehälters angeordnet oder anordenbar sind.

Das eine oder die mehreren Einbauelemente sind dann insbesondere durch Bewegen des Verschließelements selbst bewegbar, insbesondere in eine Position bringbar, in welcher diese den Flutvorgang unterstützen.

Das eine oder die mehreren Einbauelemente sind mittels des Verschließelements vorzugsweise in eine Verdrängungsposition oder Stützposition bringbar.

Günstig kann es sein, wenn das eine oder die mehreren Einbauelemente zusammen mit dem Verschließelement bewegbar, insbesondere linear bewegbar, und/oder verschwenkbar sind.

Mittels der Behandlungsstation können die Werkstücke behandelt werden, insbesondere können Fahrzeugkarosserien gereinigt und/oder beschichtet werden.

Die Werkstücke werden hierfür in einen Behandlungsraum des Behandlungsbehälters eingebracht. Im Anschluss daran wird der Behandlungsraum mit einem Fluid zur Durchführung einer Werkstückbehandlung geflutet, wobei das Fluten vorzugsweise mittels eines oder mehrerer in dem Behandlungsraum angeordneter oder anordenbarer Einbauelemente unterstützt wird.

Bei einer vorteilhaften Ausgestaltung der Erfindung kann vorgesehen sein, dass die Behandlungsstation einen Fluidtank zur Aufnahme eines Fluids umfasst. Ferner umfasst die Behandlungsstation vorzugsweise eine Fluidführung, mittels welcher das Fluid zum Fluten des Behandlungsraums aus dem Fluidtank in den Behandlungsbehälter und/oder zum Entleeren des Behandlungsraums aus dem Behandlungsbehälter in den Fluidtank führbar ist.

Die Fluidführung umfasst hierzu vorzugsweise eine oder mehrere Fluidleitungen, wobei vorzugsweise eine Fluidleitung zur Zuführung des Fluids aus dem Fluidtank zu dem Behandlungsbehälter und eine weitere Fluidleitung, insbesondere eine separate Fluidleitung, zur Zuführung des Fluids aus dem Behandlungsbehälter zu dem Fluidtank vorgesehen sind.

Günstig kann es sein, wenn der Fluidtank bezüglich der Schwerkraftrichtung über dem Behandlungsbehälter angeordnet ist.

Hierdurch kann insbesondere die Schwerkraft zur Zuführung des Fluids zu dem Behandlungsbehälter genutzt werden, wobei eine separate Pumpvorrichtung vorzugsweise entbehrlich sein kann.

Eine Pumpvorrichtung kann hingegen vorteilhaft sein, um das Fluid aus dem Behandlungsraum zurück in den Fluidtank zu pumpen.

Alternativ hierzu kann vorgesehen sein, dass der Behandlungsbehälter bezüglich der Schwerkraftrichtung über dem Fluidtank angeordnet ist. Hierdurch ist dann ohne Nutzung einer Pumpvorrichtung das Fluid aus dem Behandlungsbehälter in den Fluidtank führbar, während vorzugsweise eine Pumpvorrichtung vorgesehen ist, um das Fluid aus dem Fluidtank in den Behandlungsbehälter zu führen.

Es kann vorgesehen sein, dass die Fluidführung eine als Zuleitung ausgebildete Fluidleitung umfasst, mittels welcher das Fluid dem Behandlungsraum zuführbar ist, wobei die Zuleitung vorzugsweise in einem Bodenbereich des Behandlungsbehälters in denselben mündet. Hierdurch kann insbesondere eine unerwünschte Schaumbildung bei der Zuführung des Fluids in den Behandlungsbehälter reduziert oder vollständig vermieden werden.

Ein Bodenbereich des Behandlungsbehälters ist insbesondere ein bezüglich der Gesamthöhe des Behandlungsraums und/oder bezüglich einer Maximalfüllhöhe unteres Drittel, vorzugsweise unteres Fünftel, des Behandlungsraums.

Der Behandlungsbehälter umfasst vorzugsweise einen Zuströmbereich, welcher insbesondere unterhalb einer Zugangsöffnung des Behandlungsbehälters angeordnet ist. Der Zuströmbereich ist vorzugsweise auch in einem zum Austausch eines Werkstücks vorgesehenen entleerten Zustand des Behandlungsbehälters mit Fluid gefüllt.

Eine minimale Füllhöhe zwischen zwei Flutvorgängen und/oder zwischen der Behandlung zweier Werkstücke ist vorzugsweise so gewählt oder wählbar, dass die Fördervorrichtung und/oder sonstige Funktionskomponenten oder Tankeinbauten innerhalb des Behandlungsraums stets unterhalb des Füllpegels verbleiben. Hierdurch kann insbesondere bei der Verwendung von klebrigen oder sonstigen anhaftenden Behandlungsfluiden ein Antrocknen von Verunreinigungen vermieden werden.

Ferner kann alternativ oder ergänzend zur Vermeidung von Verunreinigungen durch klebrige oder zur Koagulation sowie Antrocknung neigende Medien vorgesehen sein, dass insbesondere nach einem Flutvorgang, insbesondere nach einer Entleerung des Behandlungsbehälters, im Behandlungsbehälter, an Einbauelementen und sonstigen Komponenten im Behandlungsraum, insbesondere an Tankeinbauten wie Düsenstöcken, Anoden und einer Fördervorrichtung, sowie an den zum Betrieb der Behandlungsstation notwendigen Rohren zur Befüllung und zum Entleeren eine Benetzung erhalten bleibt oder eine Abreinigung erfolgt. Hierzu können zur Reinigung Flüssigkeiten und/oder Filtrate zum Einsatz kommen, die über geeignete Maßnahmen wie dem Einsatz von starr angebrachten Düsenstöcken oder variabel beweglichen Tankreinigungsdüsen die Reinigungsleistung erbringen. Für schwer erreichbare Komponenten, wie beispielsweise eine Dichtung zwischen Behandlungsbehälter und Verschließvorrichtung, können optional auch selbstreinigende Methoden, wie zum Beispiel eine flutbare Dichtung mit vorzugsweise definierten Auslässen, zum Einsatz kommen.

Ferner kann vorgesehen sein, dass der Behandlungsbehälter und darin angeordnete Komponenten durch luftdichtes Abschließen vor einer Eintrocknung geschützt werden. Darüber hinaus kann die Luftfeuchtigkeit in der so abgeschlossenen Einheit überwacht werden und bei Bedarf nachbefeuchtet werden. Dies kann optional auch bei nicht luftdicht abgeschlossenen Einheiten vorgesehen sein.

Optional kann ferner auch durch permanente Benetzung mit dem eingesetzten Medium, insbesondere Behandlungsfluid, einem Verkleben entgegengewirkt werden. Dies ist insbesondere bei fördertechnischen Einbauten, aber auch bei den Rohren zur Befüllung und zur Entleerung denkbar.

Die Zuleitung mündet vorzugsweise in den Zuströmbereich, insbesondere unterhalb einer Fluidlinie des Zuströmbereichs, um eine optimierte Fluidzuführung in den Behandlungsraum zu ermöglichen.

Ferner kann vorgesehen sein, dass der Zuströmbereich in einem oder mehreren Zuströmbehältern, insbesondere Verdrängungselementen, innerhalb des Behandlungsraums angeordnet und/oder gebildet ist, wobei die Zuleitung insbesondere in den Zuströmbehälter mündet. Der Zuströmbehälter umfasst insbesondere Ausströmöffnungen, beispielsweise an dessen Oberseite, durch welche das Fluid zum Fluten des Behandlungsraums in denselben einströmen kann.

Zur Vermeidung von Sedimentation kann es vorgesehen sein, dass das Fluid im Zuströmbereich permament oder regelmäßig umgewälzt und/oder aufbereitet, insbesondere gereinigt, wird.

Günstig kann es sein, wenn die Fluidführung mehrere Zuleitungen umfasst, wobei eine oder mehrere dieser Zuleitungen in einem Bodenbereich des Behandlungsbehälters in denselben münden und/oder wobei eine oder mehrere Zuleitungen in oder an einer oder mehreren Düsen oder sonstigen Zuführöffnungen enden, mittels welcher das Fluid beispielsweise als Strahl oder Schwall auf die Werkstücke richtbar und/oder applizierbar ist.

Ein entleerter Zustand des Behandlungsbehälters ist vorzugsweise ein Zustand des Behandlungsbehälters, in welchem die eine oder die mehreren Zugangsöffnungen geöffnet werden können, ohne ein Austreten von Fluid durch die Zugangsöffnungen hindurch zu erzielen oder befürchten. Ein entleerter Zustand muss somit insbesondere kein Zustand des Behandlungsbehälters ein, in welchem jegliches Restfluid aus dem Behandlungsbehälter entfernt wurde.

Ein beim Fluten des Behandlungsraums aus demselben verdrängtes Medium, insbesondere ein Gas, beispielsweise Luft, kann beispielsweise an die Umgebung abgegeben oder aufbereitet und/oder weitergeleitet werden, beispielsweise an eine Abluftreinigungsanlage und/oder in einen Trockner zum Trocknen der Werkstücke.

Ferner kann vorgesehen sein, dass das verdrängte Medium in den Fluidtank eingeleitet wird.

Insbesondere dann, wenn eine Schaumbildung während eines Flutvorgangs oder Füllgangs aufgrund der Zuführart und/oder aufgrund des gewählten Fluids zu erwarten ist oder zu erwarten wäre, kann es vorteilhaft sein, wenn die Behandlungsstation eine Kompensationsvorrichtung zur Minimierung oder Vermeidung der Schaumbildung umfasst. Die Kompensationsvorrichtung umfasst insbesondere eine Düsenvorrichtung, beispielsweise einen Düsenstock, zum Einspritzen von Flüssigkeit, insbesondere Filtrat. Die Düsenvorrichtung ist insbesondere in einem Deckenbereich des Behandlungsraums angeordnet. Alternativ oder ergänzend hierzu kann vorgesehen sein, dass die Kompensationsvorrichtung eine Vakuumvorrichtung zum Evakuieren von Luft aus dem Behandlungsraum umfasst. Ferner kann alternativ oder ergänzend hierzu ein chemisches Medium, insbesondere ein Entschäumungsmedium, zu dem Fluid zugeführt werden.

Kommen Medien als Fluide zum Einsatz, die zu Lufteinschlüssen neigen, die eine Entgasung notwendig machen, können hierfür zusätzlich in den Behandlungsbehältern Einrichtungen zu deren Beseitigung vorgesehen sein. Neben der Möglichkeit der Vakuumierung kann alternativ oder ergänzend hierzu auch die Erzeugung von Ultraschallwellen in dem Behandlungsbehälter zur Koaleszenz der Gasbläschen im Batchverfahren sowie im Durchflussverfahren vorgesehen sein, wobei die hierfür notwendigen Einrichtungen beispielsweise in einen zusätzlich oder bereits bestehenden Kreislauf integriert oder integrierbar sind. Alternativ hierzu können chemische Modifikationen der Rezeptur und/oder eine Hinzugabe von Additiven zu dem einzubringenden Fluid vorgesehen sein.

Vorteilhaft kann es sein, wenn die Fluidführung eine Reinigungsvorrichtung zum Reinigen des Fluids umfasst.

Die Reinigungsvorrichtung ist vorzugsweise außerhalb des Behandlungsbehälters und/oder außerhalb des Fluidtanks angeordnet.

Vorzugsweise ist die Reinigungsvorrichtung in einer Rückführleitung zur Rückführung des Fluids in den Fluidtank angeordnet. Hierdurch kann das Fluid vorzugsweise bei der Rückführung desselben und/oder vor jedem Start eines Kreislaufs, insbesondere vor einem erneuten Flutvorgang in einem oder in mehreren Behandlungsbehältern, gereinigt und/oder aufbereitet werden.

Die Behandlungsstation umfasst vorzugsweise eine Steuervorrichtung, mittels welcher ein Flutvorgang im Behandlungsraum steuerbar und/oder regelbar ist, insbesondere durch Steuerung und/oder Regelung einer Ventilvorrichtung zum Öffnen und Schließen einer Zuleitung zur Zuführung von Fluid zu dem Behandlungsraum.

Zur Steuerung und/oder Regelung des Flutvorgangs werden vorzugsweise ein oder mehrere Werkstückparameter berücksichtigt, insbesondere eine Geometrie und/oder Größe und/oder Position des jeweiligen Werkstücks innerhalb des Behandlungsraums.

Der eine oder die mehreren Werkstückparameter werden insbesondere über eine Machinensteuerung und/oder durch CAD-Daten, eine Barcodeerkennung, RFID-Informationen oder sonstige werkstückspezifische Datensätze an die Steuervorrichtung übergeben.

Der Flutvorgang ist mittels der Steuervorrichtung vorzugsweise derart steuerbar, dass eine Befüllungsgeschwindigkeit und/oder eine Änderungsrate des Füllstands des Fluids im Behandlungsraum während des Flutens variiert wird, insbesondere angepasst an lokale Stabilitätsunterschiede der Werkstücke und/oder angepasst an eine sich längs der Schwerkraftrichtung verändernde Fläche der Wasseroberfläche.

Beispielsweise kann vorgesehen sein, dass der Flutvorgang mittels der Steuervorrichtung derart steuerbar ist, dass ein Fluidpegel im Behandlungsraum zumindest näherungsweise konstant steigt.

Alternativ hierzu kann vorgesehen sein, dass der Flutvorgang mittels der Steuervorrichtung derart steuerbar ist, dass der Volumenstrom des zugeführten Fluids erhöht wird, wenn der Fluidpegel stabilere Bereiche der Werkstücke überstreicht und dass der Volumenstrom des zugeführten Fluids reduziert wird, wenn der Fluidpegel des Fluids weniger stabile Bereiche der Werkstücke überstreicht.

Die Behandlungsstation kann beispielsweise eine oder mehrere Messvorrichtungen umfassen, mittels welcher beispielsweise ein Volumenstrom des in den Behandlungsraum einströmenden Fluids und/oder ein Füllstand oder Füllpegel innerhalb des Behandlungsraums und/oder ein Füllstand oder Füllpegel im Fluidtank ermittelbar sind.

Ein oder mehrere Messwerte der einen oder der mehreren Messvorrichtungen werden vorzugsweise zur Steuerung und/oder Regelung des Flutvorgangs berücksichtigt.

Vorzugsweise wird eine maximale Füllhöhe (maximaler Füllpegel) bei einem Flutvorgang abhängig von der Werkstückgeometrie und/oder Position gewählt. Beispielsweise kann bei einem als Fahrzeugkarosserie ausgebildeten Werkstück vorgesehen sein, dass der Behandlungsraum stets soweit mit Fluid gefüllt wird, dass der Füllpegel knapp über einem Dach der Fahrzeugkarosserie ist, beispielsweise höchstens ungefähr 10 cm, vorzugsweise höchstens ungefähr 5 cm, beispielsweise höchstens ungefähr 3 cm, über dem Dach.

Ferner kann vorgesehen sein, dass mittels einer oder mehrerer Messvorrichtungen eine oder mehrere Leckagen ermittelt werden, beispielsweise durch eine Füllstands- oder Füllpegel- oder Volumenstromüberwachung mittels einer oder mehrerer Messvorrichtungen. Vorzugsweise kann hieraus auf eine Dichtheit einer oder mehrerer Verschließvorrichtungen geschlossen werden.

Die Behandlungsstation kann bei einer Ausgestaltung einen Gegentank aufweisen, welcher insbesondere bezüglich der Schwerkraftrichtung unterhalb des Behandlungsraums angeordnet ist und welchem das aus dem Behandlungsraum abzuführende Fluid zuführbar ist.

Das Fluid ist hierbei vorzugsweise lediglich unter Nutzung der Schwerkraft aus dem Fluidtank in den Behandlungsraum und/oder aus dem Behandlungsraum in den Gegentank führbar.

Beispielsweise mittels einer Pumpvorrichtung kann das Fluid vorzugsweise aus dem Gegentank zurück in den Fluidtank geführt werden.

Der Fluidtank ist somit insbesondere ein Vorlagetank zur Bereitstellung des Fluids, insbesondere in einem zur Durchführung eines Behandlungsvorgangs bereiten Zustand des Fluids. Das Fluid kann hierfür insbesondere auf dem Förderweg zwischen dem Gegentank und dem Fluidtank gereinigt oder aufbereitet werden, insbesondere mittels einer Reinigungsvorrichtung.

Vorteilhaft kann es sein, wenn die Behandlungsstation zwei oder mehr als zwei Behandlungsräume umfasst, insbesondere zwei oder mehr als zwei Behandlungsbehälter mit jeweils einem Behandlungsraum.

Hierbei kann ein gemeinsamer Fluidtank zur Zuführung des Fluids zu den zwei oder mehr als zwei Behandlungsräumen vorgesehen sein.

Alternativ hierzu können mehrere Fluidtanks vorgesehen sein, insbesondere für mehrere Fluide in demselben Behandlungsraum.

Beispielsweise kann vorgesehen sein, dass ein Behandlungsraum einer Behandlungsstation wahlweise, insbesondere alternierend, mit unterschiedlichen Fluiden flutbar ist, insbesondere um unterschiedliche Behandlungsschritte an einem oder mehreren im Behandlungsraum befindlichen Werkstücken durchzuführen.

Ferner kann hierfür vorgesehen sein, dass mehrere Gegentanks für die mehreren Fluide vorgesehen sind.

Zudem kann ein Gegentank für mehr als zwei Behandlungsräume gemeinsam vorgesehen sein.

Ein Tank ist in dieser Beschreibung und den beigefügten Ansprüchen insbesondere eine allgemeine Aufnahme für ein Fluid, beispielsweise können dies Einzelbehälter oder mehrere miteinander gekoppelte Behälter sein.

Es kann vorgesehen sein, dass die Behandlungsstation eine Spülvorrichtung zum Spülen und/oder Reinigen des Behandlungsraums umfasst, wobei mittels der Spülvorrichtung insbesondere unabhängig von dem Fluid, unabhängig von dem Fluidtank und/oder unabhängig von einem Gegentank ein Spülmedium in den Behandlungsraum einbringbar, insbesondere einsprühbar, und aus demselben entfernbar, insbesondere ablassbar, ist.

Die Spülvorrichtung kann insbesondere im Behandlungsraum angeordnete und/oder in den Behandlungsraum hineingerichtete Sprühdüsen umfassen, welche insbesondere dem Abspülen von Wänden und/oder einer im Behandlungsraum angeordneten Fördervorrichtung dienen.

Zum Behandeln der Werkstücke kann bei der beschriebenen Behandlungsstation insbesondere vorgesehen sein, dass die Werkstücke in den Behandlungsraum des Behandlungsbehälters eingebracht werden und dass der Behandlungsraum zur Durchführung einer Werkstückbehandlung mit einem Fluid geflutet wird, wobei das Fluid zum Fluten des Behandlungsraums aus dem Fluidtank in den Behandlungsbehälter und/oder zum Entleeren des Behandlungsraums aus dem Behandlungsbehälter in den Fluidtank geführt wird.

Die Behandlungsstation kann insbesondere in einer Behandlungsanlage Verwendung finden.

Eine Behandlungsanlage dient insbesondere zum Behandeln von Werkstücken.

Vorzugsweise umfasst die Behandlungsanlage mehrere Behandlungsstationen zum Behandeln der Werkstücke, insbesondere zum Reinigen und/oder Beschichten von Fahrzeugkarosserien.

Jede Behandlungsstation umfasst vorzugsweise mindestens einen Behandlungsbehälter, welcher einen Behandlungsraum zur Aufnahme der Werkstücke umgibt, wobei jede Behandlungsstation für sich genommen oder mehrere Behandlungsstationen gemeinsam einen Fluidtank zur Aufnahme eines Fluids umfassen und wobei die Behandlungsstationen vorzugsweise eine Fluidführung umfassen, mittels welcher das Fluid zum Fluten eines oder mehrerer Behandlungsräume aus dem Fluidtank in den jeweiligen Behandlungsbehälter und/oder zum Entleeren der Behandlungsräume aus dem jeweiligen Behandlungsbehälter in den Fluidtank führbar ist.

Beim Fluten eines oder mehrerer Behandlungsräume wird ein Fluidpegel innerhalb des Behandlungsraums vorzugsweise um einen Faktor von mindestens 10, vorzugsweise mindestens 50, beispielsweise mindestens 100, erhöht.

Ferner wird beim Fluten eines oder mehrerer Behandlungsräume der Flüssigkeitspegel vorzugsweise von einem Minimalstand auf mindestens ungefähr 50%, vorzugsweise mindestens ungefähr 70%, beispielsweise mindestens ungefähr 90%, einer Gesamtinnenraumhöhe es Behandlungsraums angehoben.

Zum Entleeren eines oder mehrerer Behandlungsräume wird das darin befindliche Fluid, insbesondere das Behandlungsfluid, vorzugsweise zu mindestens ungefähr 50%, insbesondere mindestens ungefähr 80%, beispielsweise mindestens ungefähr 90%, aus dem Behandlungsraum entfernt.

Vorzugsweise wird für jedes Werkstück oder jede Gruppe von Werkstücken, welches bzw. welche separat in den Behandlungsraum eingebracht wird bzw. werden, ein Flutvorgang und ein Entleervorgang durchgeführt.

Bei einer Ausgestaltung der Erfindung ist vorgesehen, dass die Behandlungsanlage mehrere erste Behandlungsstationen zur Durchführung eines ersten Schritts und mehrere zweite Behandlungsstationen zur Durchführung eines zweiten Behandlungsschritts umfasst, wobei jeweils eine oder mehrere erste Behandlungsstationen und eine oder mehrere zweite Behandlungsstationen vorzugsweise Bestandteil einer Behandlungseinheit der Behandlungsanlage sind oder diese bilden, welche zur Durchführung der Behandlungsschritte von den Werkstücken durchlaufen wird.

Eine Behandlungseinheit umfasst insbesondere mehrere längs einer Hauptförderrichtung einer Fördervorrichtung zum Fördern der Werkstücke aufeinanderfolgende Behandlungsstationen. Mittels einer Behandlungseinheit sind vorzugsweise sämtliche für die Werkstückbehandlung nacheinander durchführbaren Behandlungsschritte durchführbar.

Es kann vorgesehen sein, dass die Behandlungsanlage mehrere Behandlungseinheiten umfasst, welche insbesondere jeweils eine oder mehrere erste Behandlungsstationen und eine oder mehrere zweite Behandlungsstationen umfassen und/oder welche insbesondere voneinander verschiedene Behandlungslinien der Behandlungsanlage bilden.

Eine oder mehrere erste Behandlungsstationen voneinander verschiedener Behandlungseinheiten weisen vorzugsweise eine gemeinsame Fluidführung und/oder einen gemeinsamen Fluidtank auf. Alternativ oder ergänzend hierzu kann vorgesehen sein, dass eine oder mehrere zweite Behandlungsstationen voneinander verschiedener Behandlungseinheiten eine gemeinsame Fluidführung und/oder einen gemeinsamen Fluidtank aufweisen.

Ferner kann alternativ oder ergänzend vorgesehen sein, dass eine oder mehrere erste Behandlungsstationen voneinander verschiedener Behandlungseinheiten einen gemeinsamen Gegentank und/oder eine gemeinsame Reinigungsvorrichtung aufweisen. Zudem kann alternativ oder ergänzend vorgesehen sein, dass eine oder mehrere zweite Behandlungsstationen voneinander verschiedener Behandlungseinheiten einen gemeinsamen Gegentank und/oder eine gemeinsame Reinigungsvorrichtung aufweisen.

Günstig kann es sein, wenn ein Fluid, insbesondere ein erstes Behandlungsfluid, mittels der Fluidführung zunächst
a) einem oder mehreren Behandlungsräumen einer oder mehrerer Behandlungsstationen, insbesondere erster Behandlungsstationen, einer ersten Behandlungseinheit und danach
b) einem oder mehreren Behandlungsräumen einer oder mehrerer Behandlungsstationen, insbesondere erster Behandlungsstationen, einer zweiten Behandlungseinheit zuführbar ist. Zwischen der ersten Behandlungseinheit und der zweiten Behandlungseinheit und/oder zwischen zwei Behandlungsstationen derselben Behandlungseinheit oder voneinander verschiedener Behandlungseinheiten können ein oder mehrerer Zwischenspeichertanks angeordnet sein.

Günstig kann es sein, wenn ein Fluid, insbesondere ein zweites Behandlungsfluid, mittels der Fluidführung zunächst
a) einem oder mehreren Behandlungsräumen einer oder mehrerer Behandlungsstationen, insbesondere zweiter Behandlungsstationen, einer ersten Behandlungseinheit und danach
b) einem oder mehreren Behandlungsräumen einer oder mehrerer Behandlungsstationen, insbesondere zweiter Behandlungsstationen, einer zweiten Behandlungseinheit zuführbar ist. Zwischen der ersten Behandlungseinheit und der zweiten Behandlungseinheit und/oder zwischen zwei Behandlungsstationen derselben Behandlungseinheit oder voneinander verschiedener Behandlungseinheiten können ein oder mehrerer Zwischenspeichertanks angeordnet sein.

Günstig kann es sein, wenn das Fluid mittels der Fluidführung alternierend Behandlungsräumen voneinander verschiedener Behandlungseinheiten zuführbar ist.

Alternativ oder ergänzend hierzu kann vorgesehen sein, dass das Fluid mittels der Fluidführung alternierend Behandlungsräumen derselben Behandlungseinheit zuführbar ist.

Die Fluidführung ist vorzugsweise mit einer Reinigungsvorrichtung verbunden oder umfasst eine solche, so dass das Fluid insbesondere nach einer Entnahme aus einem der Behandlungsräume und/oder vor einer erneuten Zuführung zu einem weiteren der Behandlungsräume reinigbar ist.

Die Reinigung des Fluids erfolgt vorzugsweise beim Entleeren eines Behandlungsraums und/oder nach einer einfachen oder mehrfachen Nutzung desselben in einem Flutvorgang und/oder Behandlungsschritt.

Eine Gesamtmenge eines in einer Fluidführung insgesamt enthaltenen Fluids beträgt vorzugsweise höchstens ungefähr das Doppelte, insbesondere höchstens ungefähr das Dreifache, einer zur Durchführung eines einzelnen Flutvorgangs in einem Behandlungsraum erforderlichen Menge des Fluids.

Die Fluidführung umfasst dabei vorzugsweise alle das Fluid führenden und aufnehmenden Komponenten, insbesondere einen oder mehrere Fluidtanks, einen oder mehrere Behandlungsräume, einen oder mehrere Zwischenspeichertanks und/oder einen oder mehrere Gegentanks sowie optional eine oder mehrere Reinigungsvorrichtungen.

Die Menge des Fluids ist insbesondere eine Masse des Fluids und/oder ein Volumen des Fluids, insbesondere bei Normalbedingungen.

Zur Durchführung von Reinigungsarbeiten ist das Fluid vorzugsweise wahlweise in einzelne oder mehrere Komponenten der Fluidführung bringbar, insbesondere pumpbar, und darin aufbewahrbar. Beispielsweise kann vorgesehen sein, dass zur Reinigung mindestens eines Fluidtanks das Fluid vollständig in einem oder in mehreren Behandlungsbehältern und/oder in einem oder in mehreren Gegentanks aufnehmbar ist. Ferner kann beispielsweise zur Reinigung des einen oder der mehreren Behandlungsbehälter vorgesehen sein, dass das Fluid vollständig in einem oder in mehreren Fluidtanks und/oder in einem oder in mehreren Gegentanks aufnehmbar ist. Zudem kann optional vorgesehen sein, dass beispielsweise zur Reinigung des einen oder der mehreren Gegentanks das Fluid vollständig in einem oder in mehreren Fluidtanks und/oder in einem oder in mehreren Behandlungsbehältern aufnehmbar ist.

Vorteilhaft kann es sein, wenn mehrere, insbesondere sämtliche, Behandlungsstationen einer Behandlungseinheit, insbesondere eine oder mehrere oder sämtliche erste Behandlungsstationen und eine oder mehrere oder sämtliche zweite Behandlungsstationen einer Behandlungseinheit, auf einer gemeinsamen Ebene der Behandlungsanlage angeordnet sind. Hierunter ist insbesondere zu verstehen, dass die Behandlungsräume der Behandlungsstationen ausschließlich durch eine horizontale Bewegung der Werkstücke für dieselben zugänglich sind, insbesondere ohne einen Niveauwechsel oder Levelwechsel.

Vorteilhaft kann es sein, wenn mehrere Behandlungseinheiten der Behandlungsanlage auf voneinander verschiedenen Ebenen der Behandlungsanlage angeordnet sind.

Es kann vorgesehen sein, dass mehrere Behandlungsstationen längs der Schwerkraftrichtung übereinander angeordnet sind. Die Behandlungsstationen können dabei an unterschiedlichen Abschnitten oder Niveaus einer tragenden Struktur, insbesondere einem Stahlbau, der Behandlungsanlage angeordnet, insbesondere abstützend gehalten, sein. Ferner kann vorgesehen sein, dass eine oder mehrere Behandlungsstationen jeweils eine oder mehrere darüber angeordnete weitere Behandlungsstationen krafttragend aufnehmen. Eine zusätzliche tragende Struktur kann hierbei entbehrlich sein. Die Behandlungsbehälter sind hierfür vorzugsweise derart dimensioniert und/oder ausgelegt, dass diese die Gewichtskräfte einer oder mehrerer darüber angeordneter Behandlungsstationen aufnehmen können.

Vorteilhaft kann es sein, wenn über einem oder mehreren Behandlungsbehältern oder zwischen zwei Behandlungsbehältern ein oder mehrere Fluidtanks oder Gegentanks angeordnet sind, insbesondere lastaufnehmend von dem einen oder den mehreren Behandlungsbehältern gehalten sind. Für den einen oder die mehreren Fluidtanks oder Gegentanks ist dann vorzugsweise eine zusätzliche tragende Struktur entbehrlich.

Ferner kann vorgesehen sein, dass ein oder mehrere Behandlungsbehälter direkt auf einem oder mehreren Fluidtanks und/oder Gegentanks angeordnet sind und dass der eine oder die mehreren Fluidtanks und/oder Gegentanks den einen oder die mehreren Behandlungsbehälter krafttragend aufnehmen.

Eine oder mehrere Behandlungsstationen voneinander verschiedener Behandlungseinheiten der Behandlungsanlage, welche eine gemeinsame Fluidführung aufweisen und/oder welche der Durchführung desselben Behandlungsschritts dienen, sind vorzugsweise längs der Schwerkraftrichtung übereinander angeordnet.

Die auf verschiedenen Ebenen der Behandlungsanlage angeordneten mehreren Behandlungseinheiten sind vorzugsweise funktional identisch, so dass insbesondere mit jeder Behandlungseinheit dieselben Behandlungsschritte durchführbar sind, um letztlich eine größere Behandlungskapazität der Behandlungsanlage im Vergleich zu einer einzelnen Behandlungseinheit bereitstellen zu können.

Die Werkstücke sind dabei vorzugsweise jeweils für sich genommen einer einzigen der mehreren Behandlungseinheiten zugeordnet und durchlaufen lediglich diese einzige Behandlungseinheit. Eine oder mehrere Fluidführungen sind hingegen vorzugsweise behandlungseinheitübergreifend ausgebildet und insbesondere mehreren Behandlungseinheiten zur Durchführung derselben Behandlungsschritte zugeordnet.

Günstig kann es sein, wenn längs der Schwerkraftrichtung übereinander angeordnete Behandlungsstationen mittels einer gemeinsamen Fluidführung verbunden sind, so dass insbesondere ein Fluid nacheinander den einzelnen Behandlungsstationen zuführbar und zum Durchführen von Flutvorgängen nutzbar ist, wobei insbesondere unter Nutzung der Schwerkraft das Fluid von einer Behandlungsstation zu einer längs der Schwerkraftrichtung darunter befindlichen weiteren Behandlungsstation führbar ist.

Günstig kann es sein, wenn unter sämtlichen Behandlungsstationen ein gemeinsamer Gegentank angeordnet ist und/oder wenn über sämtlichen Behandlungsstationen ein gemeinsamer Fluidtank angeordnet ist.

Das Fluid ist dann insbesondere aus dem Fluidtank zu einer oberen Behandlungsstation, dann zu einer unteren Behandlungsstation (ggf. dazwischen zu einer mittleren Behandlungsstation) und schließlich in den Gegentank führbar. Aus dem Gegentank ist das Fluid vorzugsweise mittels einer Pumpvorrichtung zurück in den Fluidtank pumpbar.

Vorteilhaft kann es sein, wenn die Behandlungsanlage mehrere Fluidführungen zur Führung voneinander verschiedener Behandlungsfluide umfasst, wobei die Fluidführungen voneinander verschiedenen Behandlungsstationen zur Durchführung unterschiedlicher Behandlungsschritte zugeordnet sind.

Alternativ oder ergänzend hierzu kann vorgesehen sein, dass die Behandlungsanlage mehrere Fluidführungen zur Führung voneinander verschiedener Behandlungsfluide umfasst, wobei die Fluidführungen denselben Behandlungsstationen zugeordnet sind, so dass den Behandlungsstationen wahlweise jeweils eines der Behandlungsfluide zuführbar ist, um wahlweise unterschiedliche Behandlungsschritte durchzuführen.

Zum Behandeln von Werkstücken wird insbesondere ein Verfahren durchgeführt, bei welchem folgende Verfahrensschritte durchgeführt werden:
Einbringen eines oder mehrerer Werkstücke in einen oder mehrere Behandlungsräume einer oder mehrerer Behandlungsstationen;
Fluten des einen oder der mehreren Behandlungsräume mit einem Fluid zur Durchführung der Behandlung,
wobei mittels einer Fluidführung das Fluid zum Fluten eines oder mehrerer Behandlungsräume aus dem Fluidtank in den jeweiligen Behandlungsraum und/oder zum Entleeren der Behandlungsräume aus dem jeweiligen Behandlungsraum in den Fluidtank geführt wird.

Günstig kann es sein, wenn das Fluid nacheinander, insbesondere vollständig zeitlich versetzt, aus dem Fluidtank entnommen und einem oder mehreren Behandlungsräumen zugeführt wird. Insbesondere danach, beispielsweise daran anschließend oder zu einem späteren Zeitpunkt, wird das Fluid vorzugsweise zurück in den Fluidtank geführt, optional nach einer Reinigung des Fluids in einer Reinigungsvorrichtung. Der Fluidtank und/oder der eine oder die mehreren Behandlungsräume werden somit vorzugsweise alternierend gefüllt und entleert.

Ferner kann vorgesehen sein, dass das Fluid nacheinander, insbesondere vollständig zeitlich versetzt, einem oder mehreren Behandlungsräumen in einer Behandlungsstation einer ersten Behandlungseinheit zugeführt wird und danach, insbesondere daran anschließend oder zu einem späteren Zeitpunkt, beispielsweise nach einer Zwischenspeicherung in einem Zwischenspeichertank, einem oder mehreren Behandlungsräumen einer Behandlungsstation einer zweiten Behandlungseinheit zugeführt wird.

Vorteilhaft kann es sein, wenn eine Behandlungsanlage mehrere Behandlungsstationen zum Behandeln der Werkstücke, insbesondere zum Reinigen und/oder Beschichten von Fahrzeugkarosserien, umfasst, wobei eine oder mehrere Behandlungsstationen vorzugsweise jeweils mindestens einen Behandlungsbehälter umfassen, welcher einen Behandlungsraum zur Aufnahme der Werkstücke umgibt.

Die Behandlungsanlage umfasst vorzugsweise eine Fluidführung, mittels welcher ein oder mehrere der Behandlungsräume wahlweise flutbar oder entleerbar sind.

Günstig kann es sein, wenn die Behandlungsanlage eine Fördervorrichtung zum Fördern der Werkstücke umfasst, mittels welcher die Werkstücke in einem entleerten Zustand des einen oder der mehreren Behandlungsräume in dieselben einbringbar oder aus denselben ausbringbar sind. Es kann vorgesehen sein, dass die Werkstücke mittels der Fördervorrichtung längs einer horizontalen Ebene bewegbar, insbesondere in den Behandlungsraum einbringbar und/oder aus dem Behandlungsraum ausbringbar, sind.

Die Werkstücke sind dabei insbesondere durch eine Zugangsöffnung hindurch in den Behandlungsraum einbringbar oder durch eine weitere oder dieselbe Zugangsöffnung aus dem Behandlungsraum ausbringbar.

Die Behandlungsanlage umfasst vorzugsweise eine sich in einer Hauptförderrichtung erstreckende Hauptförderstrecke, längs welcher die Werkstücke mittels der Fördervorrichtung von einer Behandlungsstation zu einer weiteren Behandlungsstation förderbar sind, wobei an den Behandlungsstationen vorzugsweise unterschiedliche Behandlungsschritte durchgeführt werden oder durchführbar sind.

Die Werkstücke sind vorzugsweise in einer Querausrichtung derselben längs der Hauptförderrichtung oder längs der Hauptförderstrecke förderbar.

Eine Querausrichtung der Werkstücke ist insbesondere eine Ausrichtung der Werkstücke derart, dass eine Hauptlängsachse der Werkstücke, insbesondere eine Hauptlängsachse der Fahrzeugkarosserien, quer, vorzugsweise zumindest näherungsweise senkrecht, zur Bewegungsrichtung, insbesondere Hauptförderrichtung, ausgerichtet ist, wenn die Werkstücke längs der Bewegungsrichtung, insbesondere der Hauptförderrichtung, gefördert werden.

Eine Längsausrichtung der Werkstücke ist insbesondere eine Ausrichtung der Werkstücke derart, dass eine Hauptlängsachse der Werkstücke, insbesondere eine Hauptlängsachse der Fahrzeugkarosserien, zumindest näherungsweise parallel zur Bewegungsrichtung, insbesondere Hauptförderrichtung, ausgerichtet ist, wenn die Werkstücke längs der Bewegungsrichtung, insbesondere der Hauptförderrichtung, gefördert werden.

Es kann vorgesehen sein, dass die Werkstücke in einer Längsausrichtung derselben in einen oder mehrere Behandlungsräume einbringbar oder aus denselben ausbringbar sind.

Eine Bewegungsrichtung der Werkstücke beim Einbringen in die Behandlungsräume und/oder beim Ausbringen derselben aus den Behandlungsräumen ist vorzugsweise quer, insbesondere zumindest näherungsweise senkrecht, zur Hauptförderrichtung.

Insbesondere kann es vorgesehen sein, dass die Werkstücke in einer Einbringrichtung in die Behandlungsräume einbringbar sind, wobei die Einbringrichtung quer, insbesondere zumindest näherungsweise senkrecht, zu einer Hauptförderrichtung der Fördervorrichtung ist.

Die Behandlungsanlage umfasst vorzugsweise mehrere Behandlungsstationen zur Durchführung von identischen Behandlungsschritten, wobei zwei oder mehr solcher Behandlungsstationen vorzugsweise auf einander gegenüberliegenden Seiten einer Hauptförderstrecke der Fördervorrichtung angeordnet sind.

Mittels der Fördervorrichtung sind die zugeförderten Werkstücke vorzugsweise alternierend auf die Behandlungsstationen verteilbar.

Ferner kann vorgesehen sein, dass die Behandlungsanlage mehrere Behandlungsstationen zur Durchführung von identischen Behandlungsschritten umfasst, wobei zwei oder mehr solcher Behandlungsstationen längs einer Hauptförderrichtung der Fördervorrichtung aufeinanderfolgend und/oder nebeneinander und/oder auf derselben Seite bezüglich der Hauptförderstrecke angeordnet sind. Mittels der Fördervorrichtung sind die Werkstücke vorzugsweise auch auf diese Behandlungsstationen aufteilbar, insbesondere um eine optimierte Ausnutzung der Behandlungsanlage zu ermöglichen.

Es kann vorgesehen sein, dass mehrere Behandlungsstationen eine Behandlungseinheit bilden, wobei mehrere, insbesondere sämtliche, Behandlungsstationen einer Behandlungseinheit, insbesondere eine oder mehrere oder sämtliche erste Behandlungsstationen und eine oder mehrere oder sämtliche zweite Behandlungsstationen einer Behandlungseinheit, auf einer gemeinsamen Ebene der Behandlungsanlage angeordnet sind.

Bei einer Ausgestaltung der Erfindung kann vorgesehen sein, dass die Behandlungsanlage eine sich in einer Hauptförderrichtung erstreckende Hauptförderstrecke erfasst, längs welcher die Werkstücke mittels der Fördervorrichtung von einer Behandlungsstation zu einer weiteren Behandlungsstation förderbar sind, wobei die Hauptförderstrecke einen oder mehrere Tunnelabschnitte zur Einhausung der Hauptförderstrecke umfasst.

Vorzugsweise weisen ein oder mehrere Tunnelabschnitte, insbesondere ein oder mehrere längs der Hauptförderrichtung zwischen zwei Behandlungsstationen angeordnete Tunnelabschnitte, eine Reinigungsstation und/oder Spülstation und/oder Spritzstation auf, beispielsweise zum Applizieren eines Reinigungsfluids, beispielsweise eines Entfettungsfluids. Das applizierte Fluid kann insbesondere auf die Werkstücke gesprüht oder schwallartig auf die Werkstücke abgegeben werden.

Es kann vorkommen, dass während der Förderung der Werkstücke Fluid von denselben abtropft. Die Fördervorrichtung, insbesondere eine Hauptförderstrecke, umfasst daher vorzugsweise ein oder mehrere Auffangelemente, welche beispielsweise als Auffangwannen ausgebildet sind und der Aufnahme von von den Werkstücken herabtropfendem Fluid dienen.

Zur Abdichtung in einem Übergangsbereich zwischen einem Behandlungsbehälter und einem oder mehreren Auffangelementen und/oder zwischen einem Behandlungsbehälter und einem Tunnelabschnitt können beispielsweise ein bündiger Abschluss und/oder ein oder mehrere Abdichtelemente, beispielsweise Abdichtbleche, Abdichtbürsten, Abdichthauben, und/oder ein oder mehrere Absaugvorrichtungen vorgesehen sein.

Vorteilhaft kann es sein, wenn die Behandlungsstation und/oder die Behandlungsanlage eine Gebläsevorrichtung zum Abblasen von Fluid von den Werkstücken umfasst. Eine solche Gebläsevorrichtung kann beispielsweise innerhalb eines Behandlungsbehälters und/oder in einem Tunnelabschnitt und/oder an einem Übergang dazwischen angeordnet sein. Beispielsweise kann eine Gebläsevorrichtung außerhalb des Behandlungsbehälters im Bereich der Verschließvorrichtung angeordnet und/oder ausgebildet sein.

Eine Gebläsevorrichtung umfasst insbesondere eine oder mehrere Luftvorhangvorrichtungen zur Erzeugung eines Luftvorhangs zum globalen Anströmen der Werkstücke und/oder eine oder mehrere Düsenvorrichtungen, beispielsweise Weitwurfdüsen, zur Erzeugung einzelner Strömungsjets zum lokalen Anströmen der Werkstücke, insbesondere zum gerichteten Ausblasen von Fluidansammlungen.

Die Behandlungsanlage umfasst vorzugsweise zwei Behandlungseinheiten, welche auf einer gemeinsamen Ebene der Behandlungsanlage angeordnet sind, wobei Hauptförderstrecken der Fördervorrichtungen der beiden Behandlungseinheiten antiparallel zueinander ausgerichtet sind und/oder linear aufeinanderfolgend angeordnet sind.

Insbesondere kann vorgesehen sein, dass die beiden Behandlungseinheiten einander abgewandt angeordnete Zuführstationen zur Zuführung der Werkstücke und/oder einander zugewandt angeordnete Entnahmestationen zur Entnahme der Werkstücke und/oder eine gemeinsame Entnahmestation zur Entnahme der Werkstücke aufweisen, welche insbesondere mittig zwischen den Hauptförderstrecken angeordnet ist.

Alternativ hierzu kann vorgesehen sein, dass die beiden Behandlungseinheiten einander abgewandt angeordnete Entnahmestationen zur Entnahme der Werkstücke und/oder einander zugewandt angeordnete Zuführstationen zur Zuführung der Werkstücke und/oder eine gemeinsame Zuführstation zur Zuführung der Werkstücke aufweisen, welche insbesondere mittig zwischen den Hauptförderstrecken angeordnet ist.

Vorteilhaft kann es sein, wenn die Fördervorrichtung eine oder mehrere Abzweigförderer umfasst, mittels welcher die Werkstücke von einer Hauptförderstrecke entfernbar und in einen oder mehrere Behandlungsräume einbringbar sind und/oder mittels welcher die Werkstücke aus einem oder mehreren Behandlungsräumen ausbringbar und zurück auf die Hauptförderstrecke bringbar sind.

Insbesondere bei derartigen Behandlungsanlagen kann zum Behandeln von Werkstücken, insbesondere zum Reinigen und/oder Beschichten von Fahrzeugkarosserien, vorgesehen sein, dass folgende Verfahrensschritte durchgeführt werden:
Fördern eines oder mehrerer Werkstücke mittels einer Fördervorrichtung;
Einbringen des einen oder der mehreren Werkstücke in einen Behandlungsraum einer Behandlungsstation zur Durchführung eines Behandlungsschritts;
Fluten des Behandlungsraums mit einem Fluid;
Entfernen des Fluids und Ausbringen der Werkstücke aus dem Behandlungsraum mittels der Fördervorrichtung, wobei die Werkstücke insbesondere in einer zumindest näherungsweise horizontalen Richtung in den Behandlungsraum eingebracht und aus demselben ausgebracht werden.

Vorzugsweise ist ferner vorgesehen, dass die Werkstücke längs einer Hauptförderrichtung von einer Behandlungsstation zur nächsten gefördert und in einer quer, insbesondere senkrecht, zur Hauptförderrichtung verlaufenden Einbringrichtung in die Behandlungsräume der Behandlungsstationen eingebracht werden.

Bei einer weiteren Ausgestaltung einer Behandlungsanlage kann vorgesehen sein, dass die Behandlungsanlage mehrere Behandlungsstationen zum Behandeln der Werkstücke, insbesondere zum Reinigen und/oder Beschichten von Fahrzeugkarosserien, umfasst, wobei eine oder mehrere Behandlungsstationen jeweils mindestens einen Behandlungsbehälter umfassen, welcher einen Behandlungsraum zur Aufnahme der Werkstücke umgibt, wobei die Behandlungsanlage eine Fluidführung umfasst, mittels welcher ein oder mehrere der Behandlungsräume wahlweise flutbar oder entleerbar sind.

Die Behandlungsanlage umfasst vorzugsweise eine Fördervorrichtung zum Fördern der Werkstücke, mittels welcher die Werkstücke in einem entleerten Zustand des jeweiligen Behandlungsraums durch eine als Einbringöffnung ausgebildete Zugangsöffnung in denselben einbringbar und mittels welcher die Werkstücke in einem entleerten Zustand des jeweiligen Behandlungsraums durch eine als Ausbringöffnung ausgebildete Zugangsöffnung aus demselben ausbringbar sind.

Die Einbringöffnung und die Ausbringöffnung sind vorzugsweise voneinander verschiedene Zugangsöffnungen, insbesondere in einander gegenüberliegenden Seitenwänden einer Behandlungsstation.

Vorteilhaft kann es sein, wenn die Werkstücke mittels der Fördervorrichtung längs einer horizontalen Ebene bewegbar, insbesondere in den Behandlungsraum einbringbar und/oder aus dem Behandlungsraum ausbringbar, sind.

Vorzugsweise bleibt eine Höhenposition der Werkstücke beim Einbringen derselben in den Behandlungsraum und/oder beim Ausbringen derselben aus dem Behandlungsraum zumindest näherungsweise unverändert.

Günstig kann es sein, wenn die Behandlungsanlage eine sich in einer Hauptförderrichtung erstreckende Hauptförderstrecke umfasst, längs welcher die Werkstücke mittels der Fördervorrichtung von einer Behandlungsstation zu einer weiteren Behandlungsstation förderbar sind.

Ferner kann vorgesehen sein, dass die Werkstücke in einer Längsausrichtung derselben längs der Hauptförderrichtung und/oder längs der Hauptförderstrecke förderbar sind.

Die Werkstücke sind vorzugsweise in einer Längsausrichtung derselben durch einen oder mehrere Behandlungsräume hindurchförderbar.

Erfindungsgemäß umfasst die Fördervorrichtung eine oder mehrere Übergabestationen, an welchen oder mittels welcher die Werkstücke von einer Behandlungsstation wahlweise an eine längs einer Hauptförderrichtung darauffolgende weitere Behandlungsstation derselben Behandlungseinheit und/oder einer hiervon verschiedenen Behandlungseinheit der Behandlungsanlage übergebbar sind. Mittels einer solchen Übergabestation kann insbesondere eine Übergabe von Werkstücken von einer Behandlungseinheit auf eine weitere Behandlungseinheit erfolgen, beispielsweise um eine defekte oder zu wartende oder zu reinigende Behandlungsstation einer Behandlungseinheit temporär umgehen zu können, ohne die betroffene Behandlungseinheit vollständig außer Betrieb nehmen zu müssen.

Günstig kann es sein, wenn die Behandlungsanlage mehrere Behandlungsstationen zur Durchführung von identischen Behandlungsschritten umfasst, wobei zwei oder mehrere solcher Behandlungsstationen vorzugsweise benachbart zueinander angeordnet sind und/oder Bestandteile von parallel zueinander verlaufenden Behandlungseinheiten oder deren Behandlungslinien der Behandlungsanlage sind.

Eine Behandlungslinie ist dabei insbesondere eine Behandlungseinheit, bei welcher die Behandlungsstationen der Behandlungseinheit längs einer Behandlungsrichtung, insbesondere einer Hauptförderrichtung, aufeinanderfolgend angeordnet sind.

Bei einer Ausgestaltung der Erfindung kann vorgesehen sein, dass die Behandlungsanlage eine sich in einer Hauptförderrichtung erstreckende Hauptförderstrecke umfasst, längs welcher die Werkstücke mittels der Fördervorrichtung von einer Behandlungsstation zu einer weiteren Behandlungsstation förderbar sind, wobei die Hauptförderstrecke einen oder mehrere Tunnelabschnitte zur Einhausung der Hauptförderstrecke umfasst, wobei ein oder mehrere Tunnelabschnitte, insbesondere ein oder mehrere längs der Hauptförderrichtung zwischen zwei Behandlungsstationen angeordnete Tunnelabschnitte, eine Reinigungsstation und/oder Spülstation und/oder Spritzstation aufweisen.

Eine oder mehrere Reinigungsstationen und/oder Spülstationen und/oder Spritzstationen sind vorzugsweise an einer oder mehreren Übergabestationen angeordnet und/oder ausgebildet.

Zur Abtrennung einzelner Tunnelabschnitte und/oder einer oder mehrerer Reinigungsstationen und/oder Spülstation und/oder Spritzstation kann ein mechanisches Tor, beispielsweise ein Rolltor oder Schnelllauftor, vorgesehen sein.

Die Behandlungsanlage umfasst vorzugsweise mindestens zwei Behandlungsstationen zur Durchführung desselben Behandlungsvorgangs, wobei bezüglich einer Hauptförderrichtung der Werkstücke vor und/oder nach diesen Behandlungsstationen eine Verteilervorrichtung bzw. eine Zusammenführungsvorrichtung angeordnet sind.

Mittels einer Verteilervorrichtung können die über eine Fördervorrichtung zugeführten Werkstücke vorzugsweise auf die mindestens zwei Behandlungsstationen aufgeteilt oder verteilt werden. Hierdurch kann eine gemeinsame Zuführung der Werkstücke zur Optimierung des fördertechnischen Aufwands vorgesehen sein.

Mittels einer Zusammenführungsvorrichtung sind die aus den mindestens zwei Behandlungsstationen abgeführten Werkstücke vorzugsweise zusammenführbar und gemeinsam weiterförderbar, so dass vorzugsweise ebenfalls ein fördertechnischer Aufwand minimiert werden kann.

Die Verteilervorrichtung und/oder die Zusammenführungsvorrichtung sind vorzugsweise jeweils als Querverschubvorrichtung ausgebildet.

Bei einer solchen Querverschubvorrichtung ist insbesondere vorgesehen, dass die Werkstücke in einer quer, insbesondere senkrecht, zu einer Hauptförderrichtung verlaufenden Richtung verschoben werden, um im Anschluss eine parallel zur Hauptförderrichtung versetzte Weiterförderung, insbesondere eine parallel zur Hauptförderstrecke versetzte Weiterförderung, zu ermöglichen.

Die Behandlungsanlage umfasst vorzugsweise eine oder mehrere Behandlungsstationen zur Durchführung von Flutvorgängen und eine oder mehrere Behandlungsstationen zur Durchführung von Tauchvorgängen.

In Behandlungsstationen zur Durchführung von Flutvorgängen wird vorzugsweise das Werkstück stationär belassen, während das Fluid in den Behandlungsraum eingeführt wird und somit ein Flutvorgang durchgeführt wird.

In Behandlungsstationen zur Durchführung von Tauchvorgängen ist hingegen vorzugsweise das Fluid im Wesentlichen stationär, so dass das Werkstück insbesondere von oben in das Fluid eingebracht und nach Durchführung des Behandlungsvorgangs aus demselben nach oben herausbewegt wird, beispielsweise durch Eindrehen und Ausdrehen oder Absenken und Anheben des jeweiligen Werkstücks.

Die eine oder die mehreren Behandlungsstationen zur Durchführung von Flutvorgängen dienen jeweils der Vorbehandlung der Werkstücke, insbesondere der Reinigung, Entfettung und/oder Phosphatierung.

Die eine oder die mehreren Behandlungsstationen zur Durchführung von Tauchvorgängen dienen vorzugsweise der Beschichtung der Werkstücke, insbesondere der Lackierung, beispielsweise kann eine kathodische Tauchlackieranlage in Form von Behandlungsstationen zur Durchführung von Tauchvorgängen im Anschluss an eine oder mehrere Behandlungsstationen zur Durchführung von Flutvorgängen vorgesehen sein.

Zum Behandeln der Werkstücke wird insbesondere ein Verfahren durchgeführt, welches Folgendes umfasst:
Fördern eines oder mehrerer Werkstücke mittels einer Fördervorrichtung;
Einbringen des einen oder der mehreren Werkstücke in einen Behandlungsraum einer Behandlungsstation zur Durchführung des Behandlungsschritts;
Fluten des Behandlungsraums mit einem Fluid;
Entfernen des Fluids und Ausbringen der Werkstücke aus dem Behandlungsraum mittels der Fördervorrichtung,
wobei die Werkstücke mittels der Fördervorrichtung in einem entleerten Zustand des jeweiligen Behandlungsraums durch eine als Einbringöffnung ausgebildete Zugangsöffnung in denselben eingebracht und mittels welcher die Werkstücke in einem entleerten Zustand des jeweiligen Behandlungsraums durch eine als Ausbringöffnung ausgebildete Zugangsöffnung aus demselben ausgebracht werden, wobei die Einbringöffnung und die Ausbringöffnung vorzugsweise voneinander verschiedene Zugangsöffnungen sind.

Die Werkstücke werden vorzugsweise in einer Längsausrichtung derselben längs einer Hauptförderrichtung von einer Behandlungsstation zur nächsten gefördert und in derselben Längsausrichtung durch die Behandlungsräume der Behandlungsstationen hindurchgefördert.

Günstig kann es sein, wenn ein oder mehrere Behandlungsstationen, insbesondere ein oder mehrere Behandlungsbehälter und/oder Fluidtanks, modular und/oder separat als Ganzes transportierbar ausgebildet und/oder angeordnet sind. Insbesondere kann vorgesehen sein, dass ein oder mehrere Behandlungsstationen, insbesondere ein oder mehrere Behandlungsbehälter und/oder Fluidtanks, nach Bedarf an einer Hauptförderstrecke angeordnet oder davon entfernt werden und entsprechend optional mit Werkstücken bestückbar oder in der Behandlungsreihenfolge übergehbar sind.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: eine schematische perspektivische Darstellung einer ersten Ausführungsform einer Behandlungsanlage, bei welcher zwei übereinander angeordnete Behandlungseinheiten mit jeweils mehreren Behandlungsstationen vorgesehen sind, wobei die Werkstücke mittels einer Fördervorrichtung in einer Querausrichtung längs einer Hauptförderrichtung förderbar sind;
- Fig. 2: einen schematischen vertikalen Längsschnitt durch die Behandlungsanlage aus Fig. 1;
- Fig. 3: eine schematische Draufsicht von oben auf die Behandlungsanlage aus Fig. 1;
- Fig. 4: einen schematischen vertikalen Querschnitt durch die Behandlungsanlage aus Fig. 1;
- Fig. 5: eine schematische perspektivische Darstellung einer Behandlungsstation der Behandlungsanlage aus Fig. 1;
- Fig. 6: eine weitere schematische perspektivische Darstellung der Behandlungsstation aus Fig. 5, wobei eine Seitenwandung eines Behandlungsbehälters der Behandlungsstation ausgeblendet ist;
- Fig. 7: eine der Fig. 1 entsprechende schematische perspektivische Darstellung einer zweiten Ausführungsform einer Behandlungsanlage, bei welcher die Werkstücke in einer Längsausrichtung derselben längs einer Hauptförderrichtung förderbar sind;
- Fig. 8: eine schematische Seitenansicht der Behandlungsanlage aus Fig. 7;
- Fig. 9: eine schematische Draufsicht von oben auf die Behandlungsanlage aus Fig. 7;
- Fig. 10: einen schematischen vertikalen Querschnitt durch die Behandlungsanlage aus Fig. 7;
- Fig. 11: eine der Fig. 5 entsprechende schematische perspektivische Darstellung einer Behandlungsstation der Behandlungsanlage aus Fig. 7;
- Fig. 12: eine der Fig. 11 entsprechende schematische perspektivische Darstellung der Behandlungsstation der Behandlungsanlage aus Fig. 7, wobei eine Seitenwandung eines Behandlungsbehälters der Behandlungsstation ausgeblendet ist;
- Fig. 13: eine schematische Draufsicht auf eine dritte Ausführungsform einer Behandlungsanlage, bei welcher zu beiden Seiten einer Hauptförderstrecke Behandlungsstationen vorgesehen sind;
- Fig. 14: eine schematische Draufsicht auf eine vierte Ausführungsform einer Behandlungsanlage, bei welcher zwei einander abgewandte Enden einer gemeinsamen Hauptförderstrecke oder zweier Hauptförderstrecken an Zuführstationen zum Zuführen der Werkstücke angrenzen, wobei im Wesentlichen mittig eine gemeinsame Entnahmestation zum Entnehmen der Werkstücke vorgesehen ist;
- Fig. 15: eine schematische Draufsicht auf eine fünfte Ausführungsform einer Behandlungsanlage, bei welcher Verteilervorrichtungen und Zusammenführungsvorrichtungen einer Fördervorrichtung vorgesehen sind, so dass die Werkstücke auf verschiedene Behandlungsstationen verteilbar und zur Minimierung des fördertechnischen Aufwands zusammenführbar sind;
- Fig. 16: eine schematische Draufsicht auf eine Oberseite einer sechsten Ausführungsform einer Behandlungsanlage, bei welcher eine Kombination aus Behandlungsstationen zur Durchführung von Flutvorgängen und Behandlungsstationen zur Durchführung von Tauchvorgängen vorgesehen ist;
- Fig. 17: eine vergrößerte Darstellung des Bereichs XVII in Fig. 16 in Form einer vertikalen Längsschnittdarstellung;
- Fig. 18: eine vergrößerte Darstellung des Bereichs XVIII in Fig. 17;
- Fig. 19: eine alternative Ausgestaltung der in Fig. 18 dargestellten Behandlungsstation;
- Fig. 20: einen schematischen vertikalen Querschnitt durch die Behandlungsstation gemäß Fig. 19, wobei ein anderes zu behandelndes Werkstück innerhalb eines Behandlungsraums der Behandlungsstation angeordnet ist;
- Fig. 21: eine schematische perspektivische Darstellung einer Behandlungsstation, bei welcher eine außenliegende Antriebseinheit einer Fördervorrichtung und zwei außenliegende Sensorelemente einer Sensorvorrichtung vorgesehen sind;
- Fig. 22: eine schematische perspektivische isolierte Darstellung der Fördervorrichtung und der Sensorvorrichtung aus Fig. 21;
- Fig. 23: eine vergrößerte Darstellung des Bereichs XXIII in Fig. 22, mit Blick auf eine dem Behandlungsraum zugewandte Innenseite der Antriebseinheit und eines oberen Teils einer Kopplungsvorrichtung;
- Fig. 24: eine vergrößerte Darstellung des Bereichs XXIV in Fig. 22;
- Fig. 25: eine vergrößerte Darstellung des Bereichs XXV in Fig. 22;
- Fig. 26: eine vergrößerte Darstellung des Bereichs XXVI in Fig. 22; und
- Fig. 27: eine vergrößerte Darstellung des Bereichs XXVI in Fig. 22, mit anderer Blickrichtung.

Gleiche oder funktional äquivalente Elemente sind in sämtlichen Figuren mit denselben Bezugszeichen versehen.

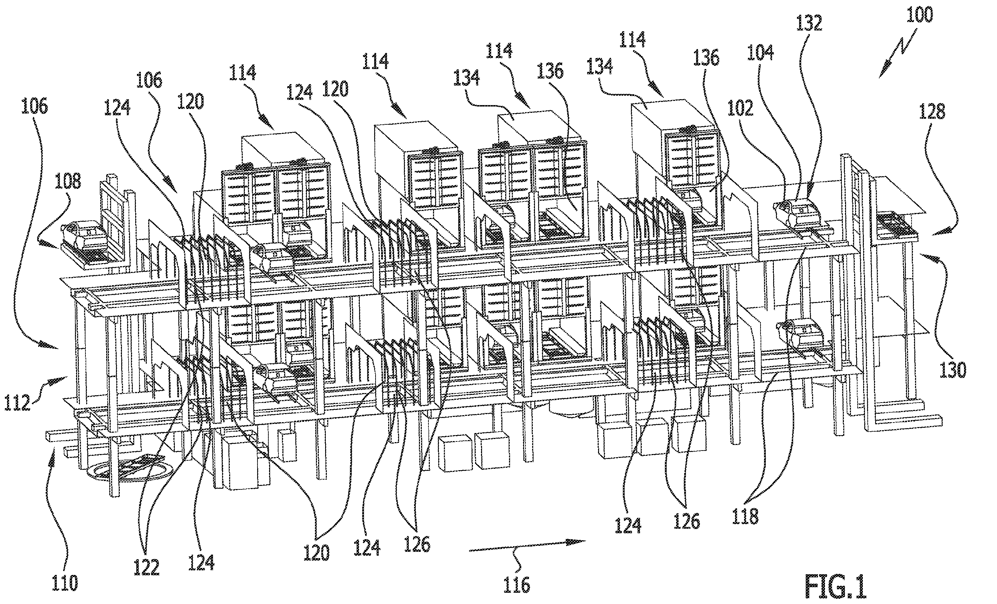

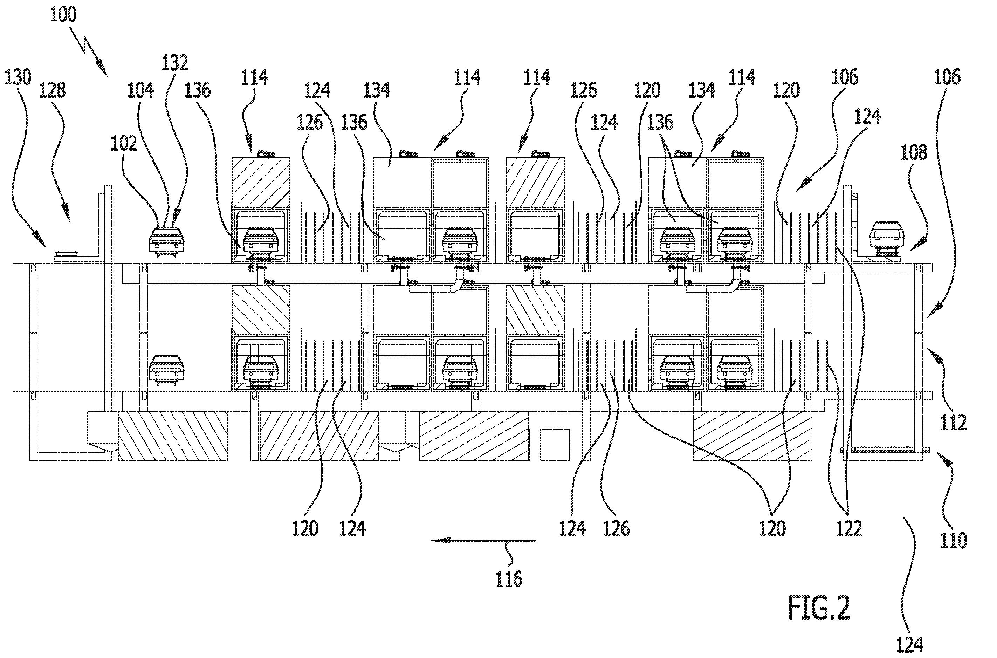

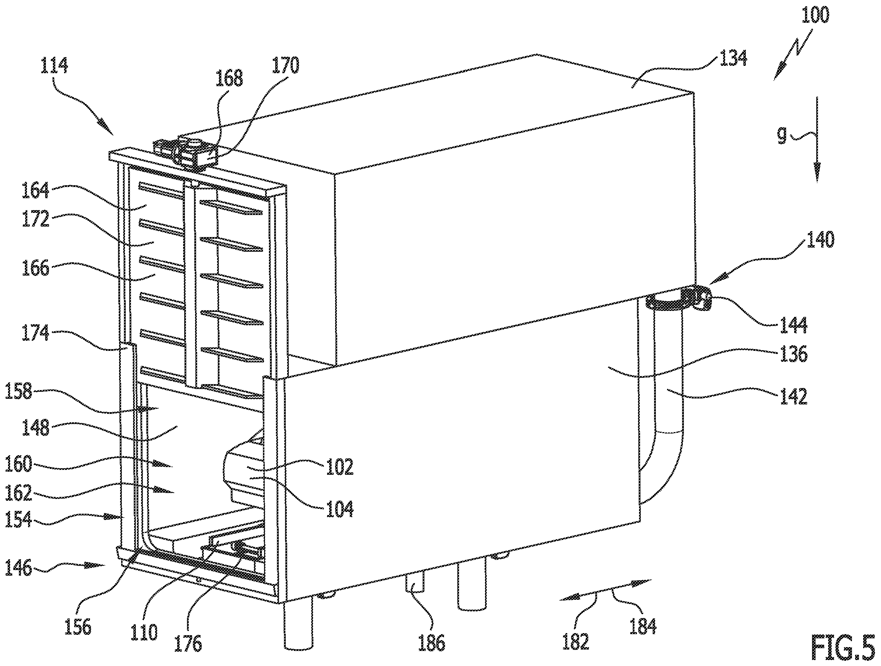

Eine in den Fig. 1 bis 6 dargestellte, als Ganzes mit 100 bezeichnete Behandlungsanlage dient dem Behandeln von Werkstücken 102, beispielsweise Fahrzeugkarosserien 104.

Die Behandlungsanlage 100 umfasst eine oder mehrere Behandlungseinheiten 106, beispielsweise zwei Behandlungseinheiten 106, welche von den Werkstücken 102 wahlweise durchlaufen werden, um mehrere Behandlungsschritte durchzuführen.

Bei der in den Fig. 1 bis 6 dargestellten ersten Ausführungsform der Behandlungsanlage 100 ist eine Zuführstation 108 zur Zuführung zu den Behandlungseinheiten 106 vorgesehen.

Die Zuführstation 108 ist dabei Bestandteil einer Fördervorrichtung 110 der Behandlungsanlage 100.

Vorzugsweise bildet die Zuführstation 108 eine Verteilervorrichtung 112 zum Verteilen der Werkstücke 102 auf die Behandlungseinheiten 106.

Die Zuführstation 108 ist beispielsweise als ein Lift ausgebildet und dient der Zuführung der Werkstücke 102 zu auf unterschiedlichen Ebenen der Behandlungsanlage 100 angeordneten Behandlungseinheiten 106.

Die Behandlungsanlage 100, insbesondere jede Behandlungseinheit 106, umfasst eine oder mehrere Behandlungsstationen 114 zum Behandeln der Werkstücke 102, insbesondere zum Durchführen von noch näher zu beschreibenden Flutvorgängen.

Die Behandlungsstationen 114 sind längs einer Hauptförderrichtung 116 der Fördervorrichtung 110 aufeinanderfolgend angeordnet.

Bei der in den Fig. 1 bis 6 dargestellten ersten Ausführungsform der Behandlungsanlage 100 ist eine Hauptförderstrecke 118 der Fördervorrichtung 110 vorgesehen, welche sich längs sämtlicher Behandlungsstationen 114 erstreckt und von welcher die Werkstücke 102 den einzelnen Behandlungsstationen 114 zuführbar sind.

Die Hauptförderstrecke 118 umfasst insbesondere einen oder mehrere Tunnelabschnitte 120 zur Einhausung von zumindest einzelnen Abschnitten der Hauptförderstrecke 118.

Ferner umfasst die Hauptförderstrecke 118 vorzugsweise eine oder mehrere Reinigungsstationen 122 und/oder Spritzstationen 124 und/oder Spülstationen 126.

Die Reinigungsstation 122, die Spritzstation 124 und/oder die Spülstation 126 sind insbesondere bezüglich der Hauptförderrichtung 116 vor einer oder mehreren Behandlungsstationen 114, zwischen mehreren Behandlungsstationen 114 und/oder nach einer oder mehreren Behandlungsstationen 114 angeordnet und/oder ausgebildet.

Nach der Behandlung der Werkstücke 102 sind dieselben mittels einer Entnahmestation 128 weiterförderbar.

Die Entnahmestation 128 bildet insbesondere eine Zusammenführungsvorrichtung 130 zur Zusammenführung der an den unterschiedlichen Behandlungseinheiten 106 behandelten Werkstücke 102 und zur gemeinsamen Weiterförderung derselben.

Die Werkstücke 102 sind bei der in den Fig. 1 bis 6 dargestellten ersten Ausführungsform der Behandlungsanlage 100 insbesondere in einer Querausrichtung 132 förderbar, insbesondere längs der Hauptförderrichtung 116 in einer Querausrichtung 132 förderbar.

In die Behandlungsstationen 114, welche insbesondere seitlich an die Hauptförderstrecke 118 angrenzen, werden die Fahrzeugkarosserien 104 vorzugsweise längs einer Längsachse derselben eingebracht.

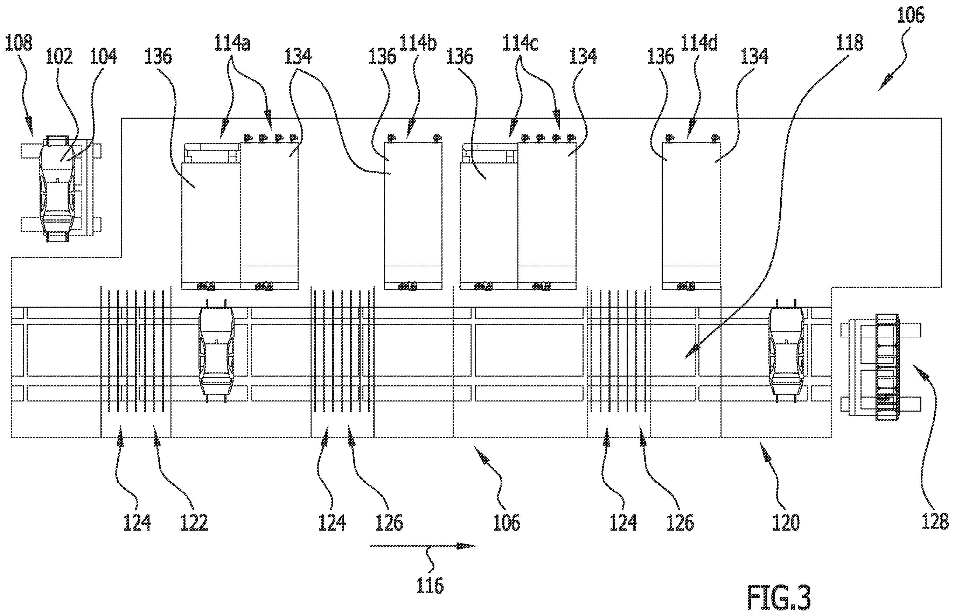

Wie insbesondere aus Fig. 3 hervorgeht, sind beispielsweise bei jeder Behandlungseinheit 106 eine erste Behandlungsstation 114a, eine zweite Behandlungsstation 114b, eine dritte Behandlungsstation 114c und eine vierte Behandlungsstation 114d vorgesehen.

Jeder Behandlungsstation 114a, 114b, 114c, 114d ist dabei vorzugsweise ein Fluidtank 134 zugeordnet.

Zudem umfasst jede Behandlungsstation 114a, 114b, 114c, 114d einen oder mehrere Behandlungsbehälter 136 zur Durchführung einer Werkstückbehandlung.

Die Werkstücke 102 sind insbesondere mit einem oder mehreren als Flüssigkeit ausgebildeten Fluiden behandelbar.

Während der Förderung der Werkstücke 102 kann somit insbesondere Flüssigkeit von denselben abtropfen.

Die Fördervorrichtung 110, insbesondere die Hauptförderstrecke 118, umfasst daher vorzugsweise ein oder mehrere Auffangelemente 138, welche beispielsweise als Auffangwannen ausgebildet sind und der Aufnahme von von den Werkstücken 102 herabtropfender Flüssigkeit dienen.

Die Auffangelemente 138 sind insbesondere in eine noch zu beschreibende Fluidführung der Behandlungsanlage 100 eingebunden, um die damit aufgefangene Flüssigkeit wiederverwenden oder abführen zu können.

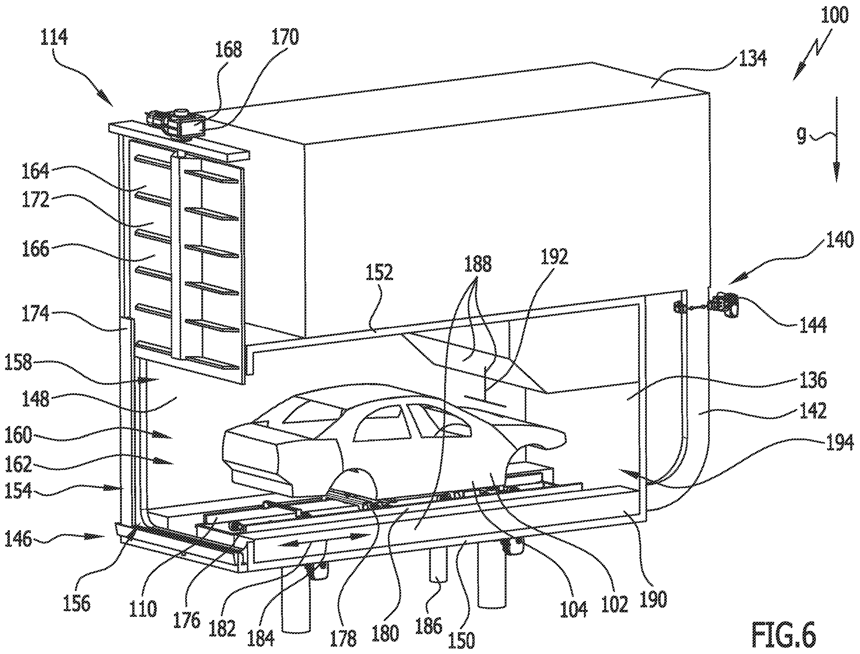

Wie insbesondere aus Fig. 6 hervorgeht, umfasst jede Behandlungsstation 114 einen beispielsweise über einem Behandlungsbehälter 136 angeordneten Fluidtank 134, welcher beispielsweise ein Flüssigkeitstank ist.

Der Fluidtank 134 und der Behandlungsbehälter 136 sind mittels einer Fluidführung 140 miteinander verbunden oder bilden einen Bestandteil einer Fluidführung 140.

Die Fluidführung 140 umfasst insbesondere eine Fluidleitung, beispielsweise eine Zuleitung 142, mittels welcher das Fluid aus dem Fluidtank 134 in den Behandlungsbehälter 136 einleitbar ist.

Mittels einer Ventilvorrichtung 144 ist die Zuführung insbesondere hinsichtlich des Volumenstroms steuerbar und/oder regelbar.

Die Zuleitung 142 mündet insbesondere in einem Bodenbereich 146 in einen Behandlungsraum 148 innerhalb des Behandlungsbehälters 136.

Der Behandlungsbehälter 136 umfasst insbesondere eine geschlossene Bodenwand 150, eine geschlossene Deckenwand 152, zwei geschlossene Seitenwände 154 und eine geschlossene Stirnwand (weitere Seitenwand) 156.

Die weitere Stirnwand 156, d.h. die weitere und somit vierte Seitenwand 154, ist vorzugsweise mit einer Zugangsöffnung 158 versehen.

Die Zugangsöffnung 158 erstreckt sich vorzugsweise über mindestens ungefähr 60%, vorzugsweise mindestens ungefähr 80%, insbesondere mindestens ungefähr 95%, einer Gesamtfläche der Stirnwand 156.

Die Zugangsöffnung 158 dient insbesondere dem Einbringen der Werkstücke 102 und/oder dem Ausbringen der Werkstücke 102.

Die Zugangsöffnung 158 ist somit insbesondere eine Einbringöffnung 160 und/oder eine Ausbringöffnung 162.

Die Zugangsöffnung 158 ist vorzugsweise mittels einer Verschließvorrichtung 164 der Behandlungsstation 114 verschließbar.

Die Verschließvorrichtung 164 umfasst insbesondere ein Verschließelement 166, welches mittels eines Verschließantriebs 168 wahlweise in eine Offenstellung oder in eine Schließstellung bringbar ist.

Der Verschließantrieb 168 ist oder umfasst beispielsweise eine Hubvorrichtung 170.

Insbesondere umfasst der Verschließantrieb 168 einen Elektromotor und einen Spindelantrieb zum Antreiben, insbesondere Anheben und Absenken, des Verschließelements 166.

Das Verschließelement 166 kann hierdurch vorzugsweise vor die Zugangsöffnung 158 bewegt oder über dieselbe angehoben werden.

Das Verschließelement 166 bildet insbesondere ein Schleusentor 172 der Verschließvorrichtung 164.

Zum Führen des Verschließelements 166 und/oder zum Abstützen eines auf das Verschließelement 166 während eines Flutvorgangs im Behandlungsbehälter 136 wirkenden Fluiddrucks ist an dem Behandlungsbehälter 136 vorzugsweise eine Führungsvorrichtung 174 zur verschiebbaren Aufnahme und Führung des Verschließelements 166 vorgesehen.

Die Verschließvorrichtung 164 ist vorzugsweise selbsthemmend und/oder selbstabdichtend ausgebildet, um eine Fluiddichtigkeit des Behandlungsbehälters 136 zu gewährleisten.

Im Bodenbereich 146 des Behandlungsbehälters 136 ist insbesondere eine Fördervorrichtung 110 oder zumindest ein Abschnitt einer Fördervorrichtung 110 angeordnet und/oder ausgebildet.

Insbesondere ist in dem Bodenbereich 146 eine Führungsvorrichtung 176 der Fördervorrichtung 110 zur lasttragenden Aufnahme der Werkstücke 102 angeordnet und/oder ausgebildet.

Mittels dieser Führungsvorrichtung 176 sind insbesondere Aufnahmevorrichtungen 178, beispielsweise Skids 180 zur Aufnahme von als Fahrzeugkarosserien 104 ausgebildeten Werkstücken 102, aufnehmbar und in einer Einbringrichtung 182, insbesondere in einer horizontalen Richtung 184, in den Behandlungsraum 148 einbringbar und/oder aus demselben ausbringbar. Die Fördervorrichtung 110 weist vorzugsweise innerhalb des Behandlungsbehälters 136 lediglich die Führungsvorrichtung 176 auf. Antriebskomponenten der Fördervorrichtung 110 sind vorzugsweise außerhalb des Behandlungsbehälters 136 angeordnet und/oder ausgebildet.

Zum Durchführen eines Flutvorgangs im Behandlungsbehälter 136 ist das Fluid über die Zuleitung 142 zuführbar. Mittels einer Ableitung 186 ist das Fluid vorzugsweise aus dem Behandlungsbehälter 136 abführbar.

Um das Werkstück 102 vollständig mit Fluid umströmen zu können oder um das Werkstück 102 vollständig im Fluid versinken zu lassen, muss der Innenraum (Behandlungsraum 148) des Behandlungsbehälters 136 bis zu einer gewissen Füllhöhe mit Fluid gefüllt werden.

Um die hierfür erforderliche Fluidmenge zu minimieren, sind vorzugsweise ein oder mehrere Einbauelemente 188, insbesondere als Verdrängungselemente 190 ausgebildete Einbauelemente 188, vorgesehen.

Ein Verdrängungselement 190 dient dabei insbesondere dazu, den Freiraum im Behandlungsraum 148, welcher unnötigerweise mit Fluid gefüllt werden müsste, zu minimieren.

Die Verdrängungselemente 190 sind dabei insbesondere zumindest abschnittsweise an eine Form des zu behandelnden Werkstücks 102 angepasst, beispielsweise folgt eine dem Werkstück 102 zugewandte Form zumindest näherungsweise einer Form eines Frontbereichs des Werkstücks 102 (siehe Fig. 6).

Zudem kann im Bereich der Fördervorrichtung 110 mindestens ein als Verdrängungselement 190 ausgebildetes Einbauelement 188 vorgesehen sein, um die Freiräume im Bodenbereich 146 zu minimieren.

Als weitere Einbauelemente 188 können beispielsweise ein oder mehrere Stützelemente 192 vorgesehen sein.

Ein Stützelement 192 kann beispielsweise das Werkstück 102 zumindest bereichsweise abstützen, um dieses gegen eine Bewegung und/oder Verformung beim Flutvorgang zu sichern, insbesondere abzustützen. Hierdurch kann vorzugsweise ein beschleunigtes Fluten des Behandlungsraums 148 realisiert werden.

Nach erfolgtem Fluten wird das jeweilige Stützelement 192 vorzugsweise von dem Werkstück 102 entfernt, um eine vollständige Benetzung und/oder Umströmung des Werkstücks 102 mit Fluid zu gewährleisten.

Ferner können ein oder mehrere Verdrängungselemente 190 vor, während und/oder nach dem Flutvorgang bewegt werden, um den Flutvorgang zu optimieren.

Insbesondere dann, wenn das Fluid beim Einströmen desselben zur Schaumbildung neigt, kann vorgesehen sein, dass dieses in einem Zuströmbereich 194 unterhalb eines permanenten und/oder minimalen Fluidpegels in den Behandlungsraum 148 einströmt. Dieser Zuströmbereich 194 ist insbesondere unterhalb der Zugangsöffnung 158 angeordnet, um ein unerwünschtes Ausfließen von Fluid beim Öffnen der Verschließvorrichtung 164 zu vermeiden.

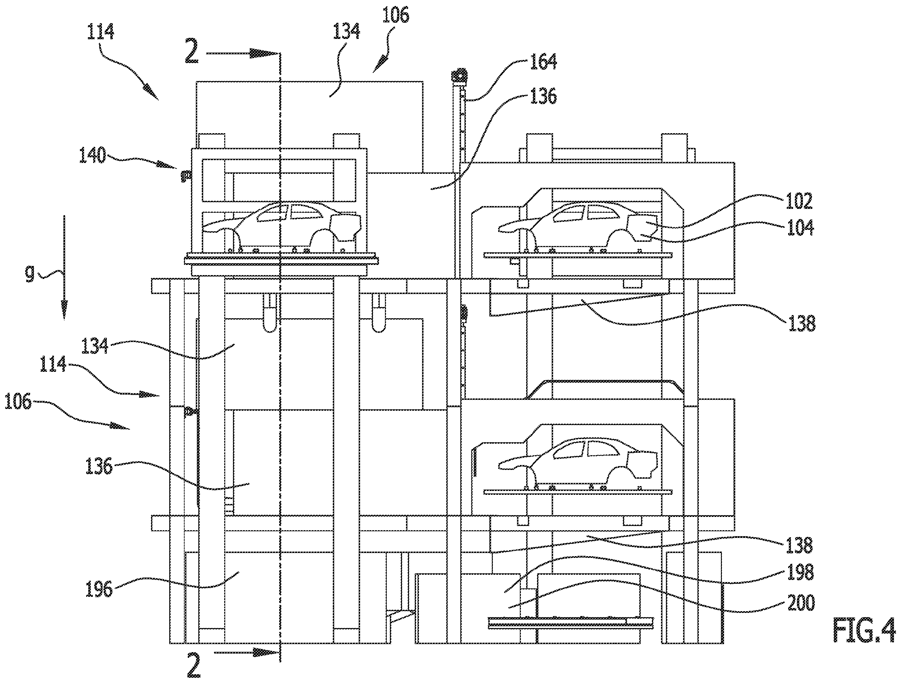

Wie insbesondere Fig. 4 zu entnehmen ist, können die Behandlungsstationen **114** voneinander verschiedener Behandlungseinheiten 106 mittels einer oder mehrerer gemeinsamer Fluidführung 140 miteinander verbunden sein.

Insbesondere kann vorgesehen sein, dass mittels der Fluidführung 140 Fluid aus einem Fluidtank 134 einer bezüglich der Schwerkraftrichtung g oberen Behandlungseinheit 106 zunächst in einen Behandlungsbehälter 136 dieser oberen Behandlungseinheit 106 geführt wird, im Anschluss daran aus dem Behandlungsbehälter 136 in einen Fluidtank 134 einer bezüglich der Schwerkraftrichtung g unteren Behandlungseinheit 106 eingeleitet wird und damit zur Nutzung für einen Flutvorgang in einem Behandlungsbehälter 136 der unteren Behandlungseinheit 106 zur Verfügung steht.

Im Anschluss daran kann das Fluid beispielsweise in einen unterhalb der unteren Behandlungseinheit 106 angeordneten Gegentank 196 geführt werden, von wo aus das Fluid beispielsweise mittels einer Pumpvorrichtung 198 und/oder nach Reinigung desselben mittels einer Reinigungsvorrichtung 200 zurück in den Fluidtank 134 der oberen Behandlungseinheit 106 geführt wird.

Derartige Fluidführungen 140 können grundsätzlich für jede Art von Behandlungsstation 114 von jeweils mehreren Behandlungseinheiten 106 vorgesehen sein.

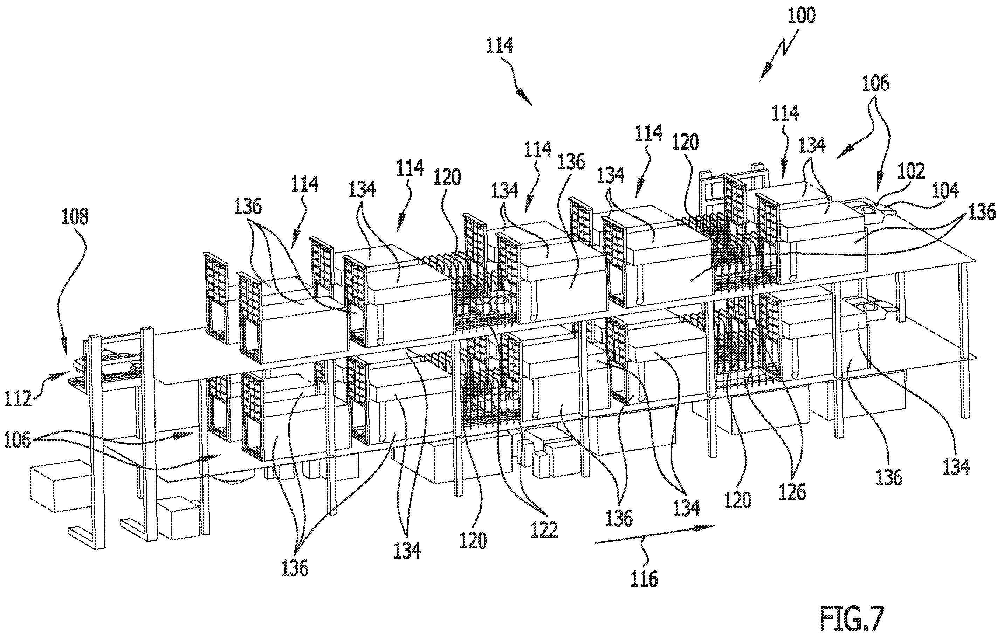

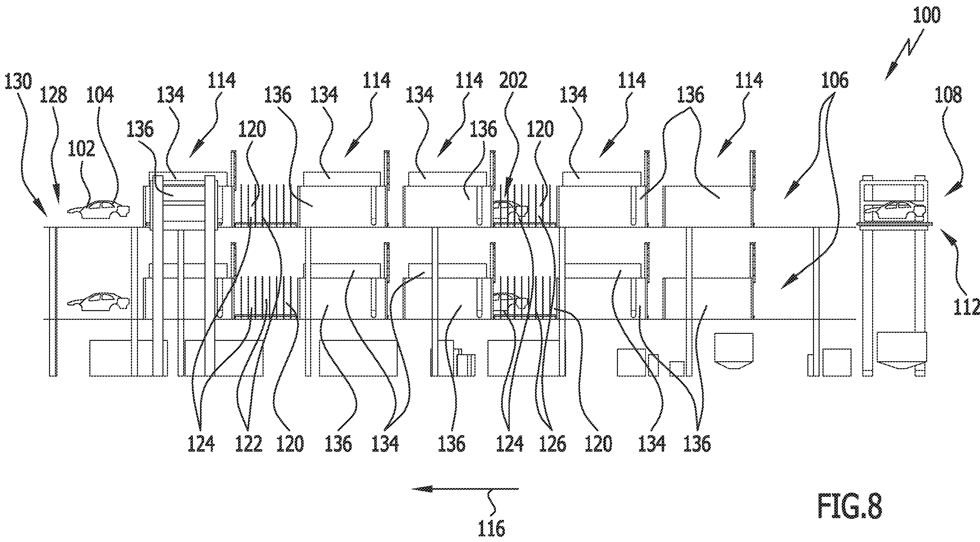

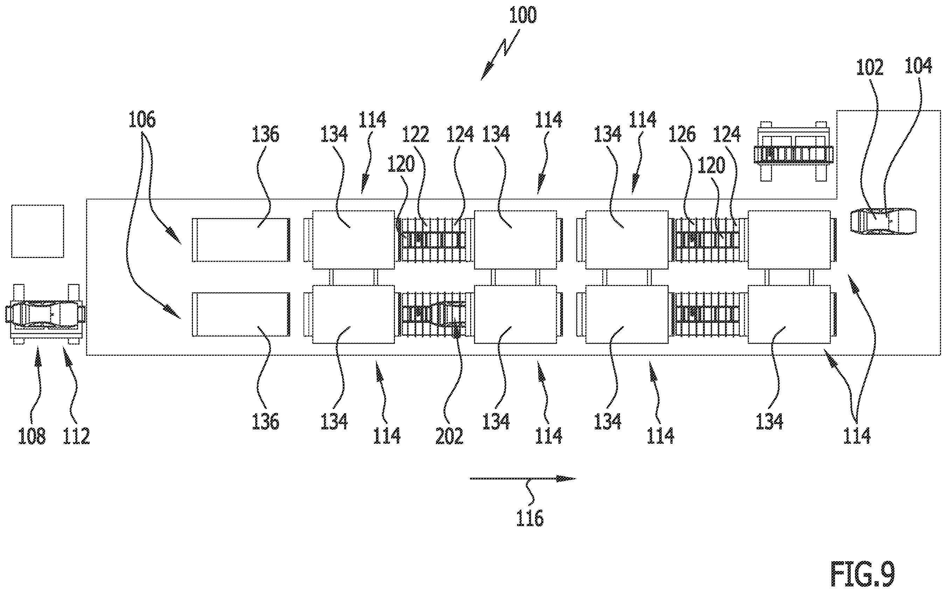

Eine in den Fig. 7 bis 12 dargestellte zweite Ausführungsform einer Behandlungsanlage 100 unterscheidet sich von der in den Fig. 1 bis 6 dargestellten ersten Ausführungsform im Wesentlichen dadurch, dass die Werkstücke 102 in einer Längsausrichtung 202 längs der Hauptförderrichtung 116 durch die Behandlungsbehälter 136 der Behandlungsstationen 114 hindurchgefördert werden.

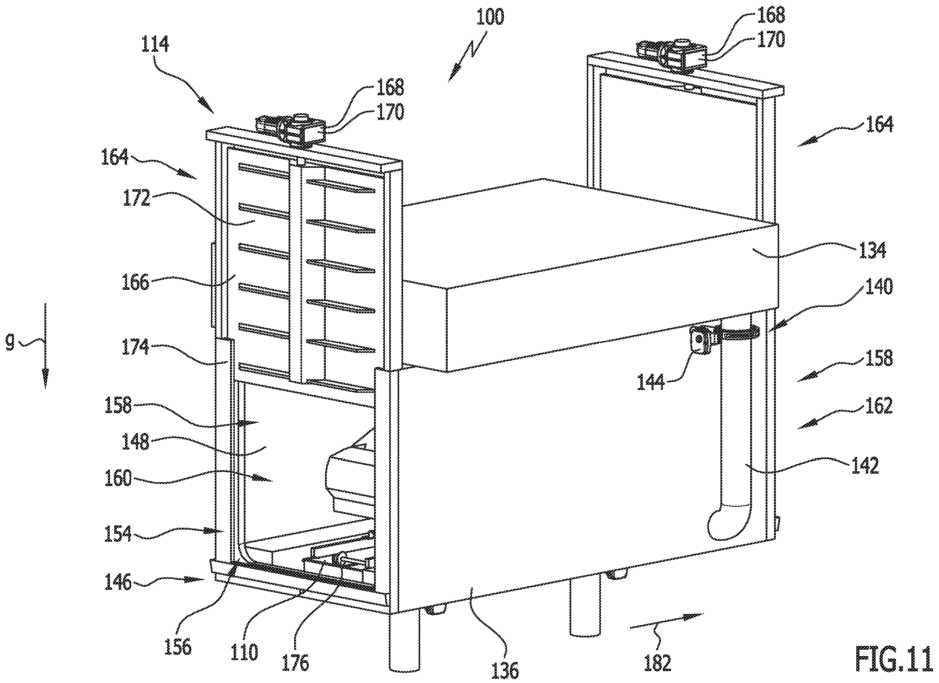

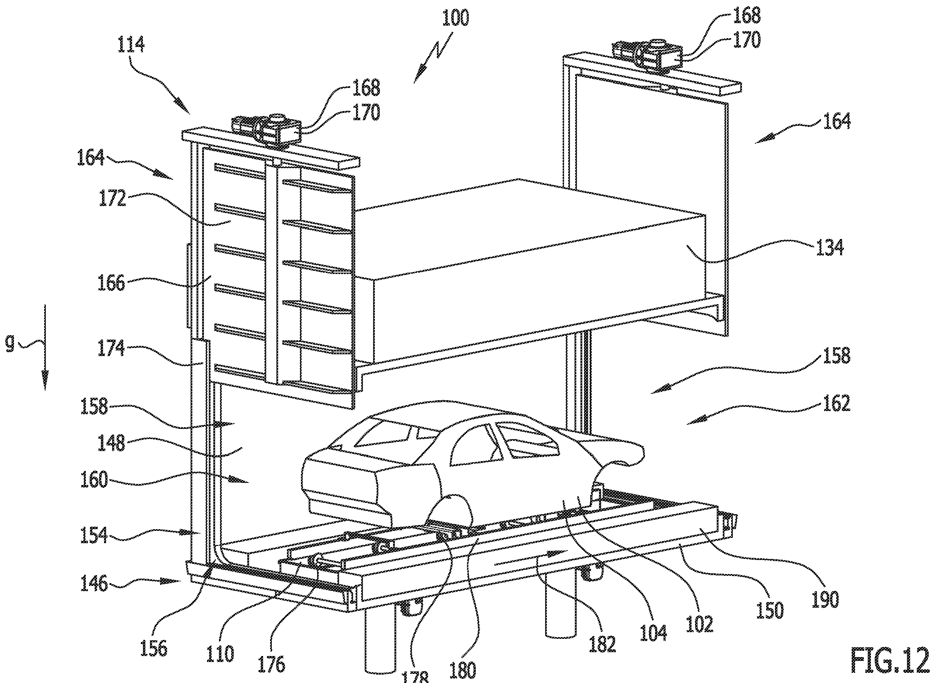

Wie insbesondere den Fig. 11 und 12 zu entnehmen ist, sind die Behandlungsbehälter 136 der Behandlungsstationen 114 hierfür beidseitig mit Zugangsöffnungen 158 versehen, wobei eine Zugangsöffnung 158 die Einbringöffnung 160 bildet und die weitere Zugangsöffnung 158 die Ausbringöffnung 162 bildet.

Die Werkstücke 102 sind dabei insbesondere in der Einbringrichtung 182 durch die Behandlungsräume 148 hindurchförderbar.

Zum Durchführen eines Flutvorgangs in den Behandlungsräumen 148 sind beide Zugangsöffnungen 158 zu verschließen. Hierfür ist jeder Zugangsöffnung 158 eine separate Verschließvorrichtung 164 zugeordnet.

Bei der in den Fig. 7 bis 12 dargestellten Ausführungsform bilden die hintereinander angeordneten Behandlungsstationen 114 beispielsweise Behandlungslinien.

Jede Behandlungslinie kann dabei eine Behandlungseinheit 106 sein, so dass beispielsweise auf derselben Ebene jeweils zwei Behandlungseinheiten 106 anordenbar sind.

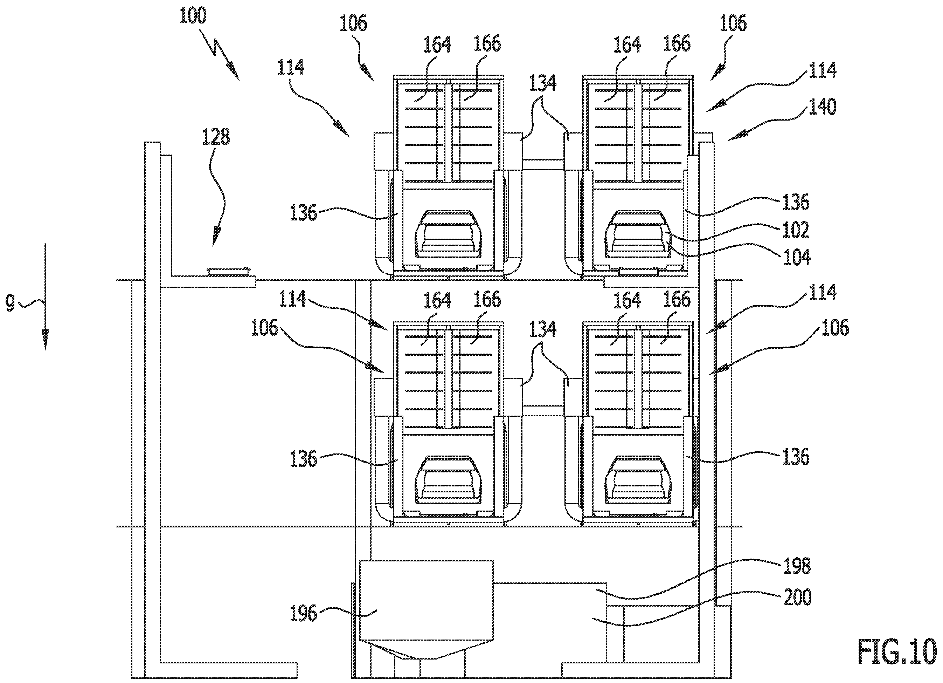

Die Fluidführungen 140 können dabei den Behandlungsstationen 114 auf derselben Ebene oder auf unterschiedlichen Ebenen zugeordnet sein (siehe insbesondere Fig. 10), um eine optimierte Fluidführung und/oder Fluidnutzung zu ermöglichen.

Im Übrigen stimmt die in den Fig. 7 bis 12 dargestellte zweite Ausführungsform der Behandlungsanlage 100 hinsichtlich Aufbau und Funktion mit der in den Fig. 1 bis 6 dargestellten ersten Ausführungsform überein, so dass auf deren vorstehende Beschreibung insoweit Bezug genommen wird.

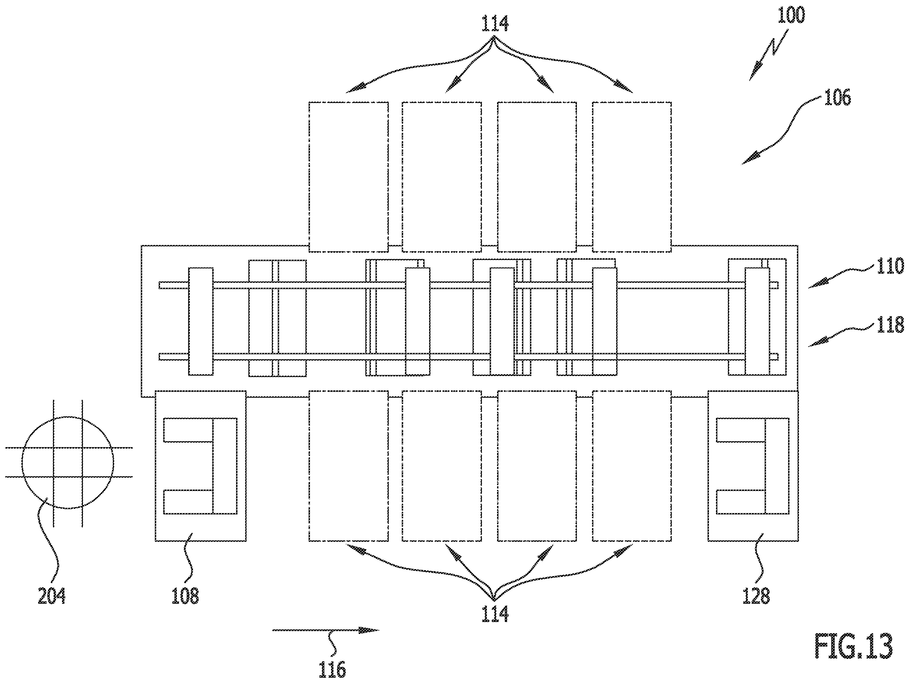

Eine in Fig. 13 dargestellte dritte Ausführungsform einer Behandlungsanlage 100 unterscheidet sich von der in den Fig. 1 bis 6 dargestellten ersten Ausführungsform im Wesentlichen dadurch, dass die Behandlungsstationen 114 beidseitig der Hauptförderstrecke 118 angeordnet sind.

Mittels der Fördervorrichtung 110 sind die Werkstücke 102 somit wahlweise rechts oder links der Hauptförderstrecke 118 in die Behandlungsräume 148 der Behandlungsstationen 114 einbringbar, um die Werkstückbehandlung durchzuführen. Die Hauptförderstrecke 118 kann hierdurch besonders kurz und kompakt ausgebildet sein.

Mittels eines Drehtischs 204 kann insbesondere vor oder an der Zuführstation 108 eine Ausrichtung der Werkstücke 102 verändert werden, um eine optimierte Zuführung zu der Hauptförderstrecke 118 zu ermöglichen.

Eine (in Fig. 13 nicht dargestellte) Fluidführung 140 ist bei der in Fig. 13 dargestellten dritten Ausführungsform beispielsweise derart vorgesehen, dass stets die bezüglich der Hauptförderstrecke 118 einander gegenüberliegend angeordneten Behandlungsstationen 114 eine gemeinsame Fluidführung 114 aufweisen und somit der Durchführung desselben Behandlungsschritts dienen.

Die in Fig. 13 dargestellte dritte Ausführungsform der Behandlungsanlage 100 kann eine Behandlungseinheit 106 bilden, welche selbstverständlich mehrfach, insbesondere übereinander, vorgesehen sein kann.

Im Übrigen stimmt die in Fig. 13 dargestellte dritte Ausführungsform der Behandlungsanlage 100 hinsichtlich Aufbau und Funktion mit der in den Fig. 1 bis 6 dargestellten ersten Ausführungsform überein, so dass auf deren vorstehende Beschreibung insoweit Bezug genommen wird.

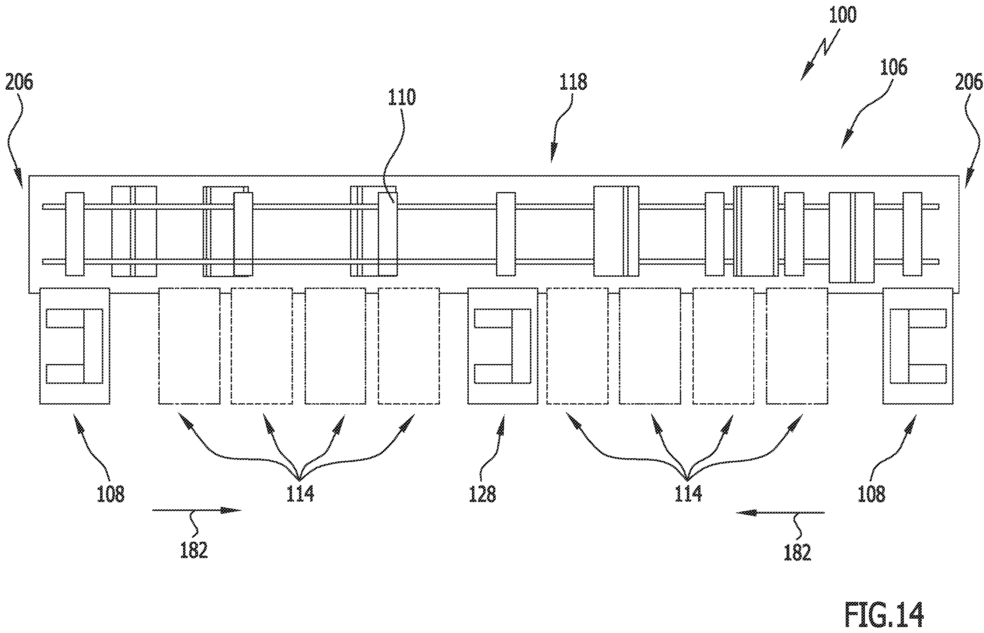

Eine in Fig. 14 dargestellte vierte Ausführungsform einer Behandlungsanlage 100 unterscheidet sich von der in den Fig. 1 bis 6 dargestellten ersten Ausführungsform im Wesentlichen dadurch, dass eine bezüglich der Hauptförderstrecke 118 oder bezüglich zweier Hauptförderstrecken 118 mittig angeordnete Entnahmestation 128 vorgesehen ist. Die Werkstücke 102 werden somit mittig von der Behandlungseinheit 106 entfernt und entsprechend an einander abgewandten Enden 206 der Hauptförderstrecke 118 zugeführt. Hierfür ist an den Enden 206 jeweils eine Zuführstation 108 vorgesehen.

Die Werkstücke 102 werden somit von den beiden Zuführstationen 108 aufeinanderzu gefördert und mittels der gemeinsamen Entnahmestation 128 abgeführt und weitergefördert.

Im Übrigen stimmt die in Fig. 14 dargestellte vierte Ausführungsform der Behandlungsanlage 100 hinsichtlich Aufbau und Funktion mit der in den Fig. 1 bis 6 dargestellten ersten Ausführungsform überein, so dass auf deren vorstehende Beschreibung insoweit Bezug genommen wird.

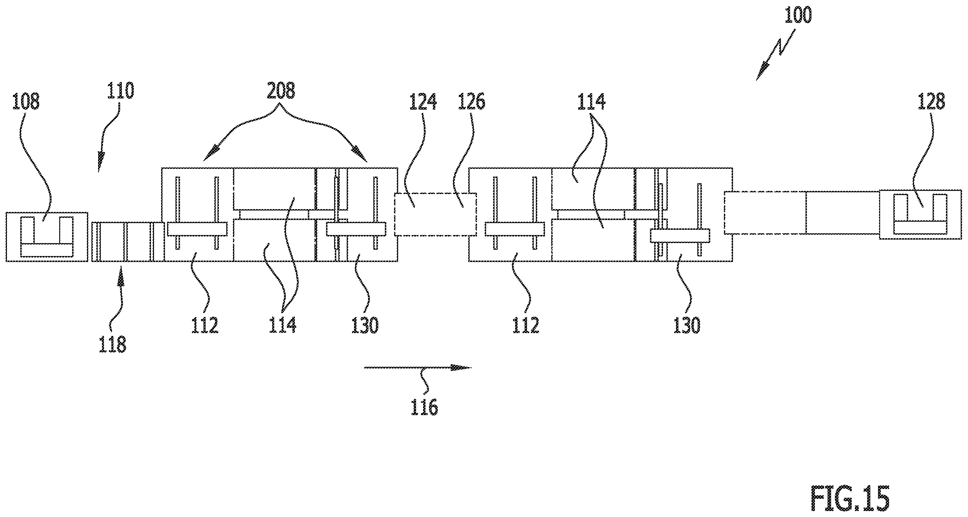

Eine in Fig. 15 dargestellte fünfte Ausführungsform einer Behandlungsanlage 100 unterscheidet sich von der in den Fig. 7 bis 12 dargestellten zweiten Ausführungsform im Wesentlichen dadurch, dass eine eine Behandlungslinie bildende Behandlungseinheit 106 mehrere parallel zueinander bestückbare Behandlungsstationen 114 umfasst.

Eine Hauptförderstrecke 118 der Fördervorrichtung 110 der Behandlungsanlage 100 umfasst hierfür vorzugsweise eine oder mehrere Verteilervorrichtungen 112, um die über eine Zuführstation 108 zugeführten Werkstücke 102 auf parallel zueinander angeordnete Behandlungsstationen 114 zu verteilen.

Die Verteilervorrichtung 112 ist insbesondere eine Querverschubvorrichtung 208.

Eine weitere Querverschubvorrichtung 208 bildet vorzugsweise eine Zusammenführungsvorrichtung 130, welche nach den Behandlungsstationen 114 angeordnet ist und der Zusammenführung der Werkstücke 102 und gemeinsamen Weiterförderung derselben dient. Insbesondere sind die Werkstücke 102 dann einer Spülstation 126 oder Spritzstation 124 zuführbar.

Eine oder mehrere weitere Verteilervorrichtungen 112, parallel zueinander angeordnete Behandlungsstationen 114 und/oder Zusammenführungsvorrichtungen 130 können dann für weitere Behandlungsschritte der Behandlungsanlage 100 vorgesehen sein.

Bei der in Fig. 15 dargestellten fünften Ausführungsform der Behandlungsanlage sind zwei derartige Behandlungsschritte mit jeweils parallel zueinander angeordneten Behandlungsstationen 114 vorgesehen.

Im Übrigen stimmt die in Fig. 15 dargestellte fünfte Ausführungsform einer Behandlungsanlage 100 hinsichtlich Aufbau und Funktion mit der in den Fig. 7 bis 12 dargestellten zweiten Ausführungsform überein, so dass auf deren vorstehende Beschreibung insoweit Bezug genommen wird.

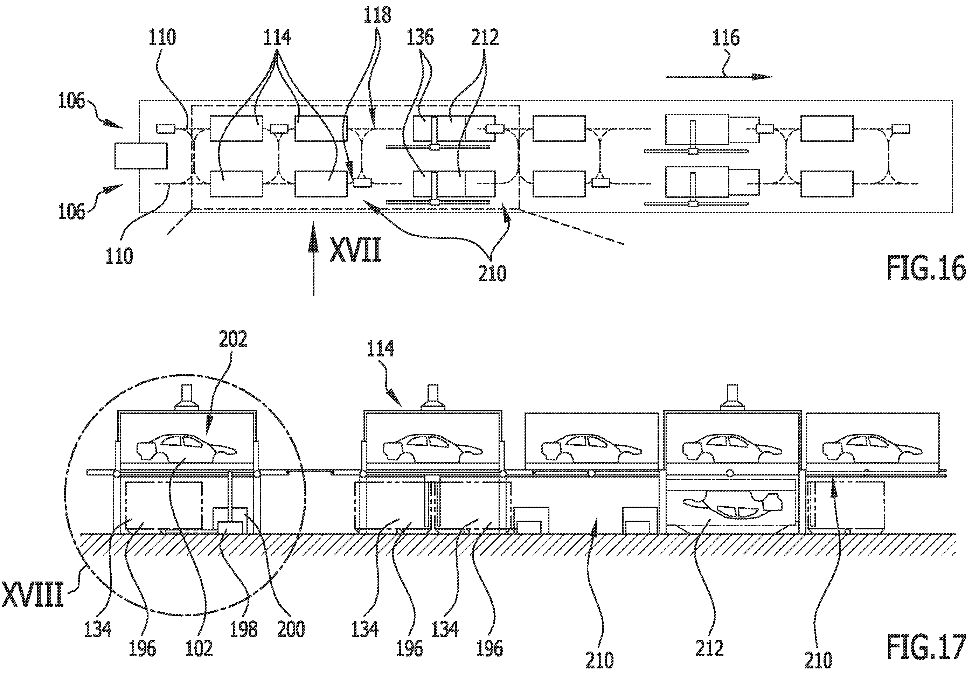

Eine in den Fig. 16 bis 18 dargestellte sechste Ausführungsform einer Behandlungsanlage 100 unterscheidet sich von der in den Fig. 7 bis 12 dargestellten zweiten Ausführungsform im Wesentlichen dadurch, dass zwischen zwei auf einer Ebene angeordneten Behandlungseinheiten 106 ein Werkstückaustausch 102 möglich ist.

Die Fördervorrichtungen 110 der Behandlungseinheiten 106 umfassen hierfür eine oder mehrere Übergabestationen 210, mittels welcher die Werkstücke 102 von der Fördervorrichtung 110 der einen Behandlungseinheit 106 auf die Fördervorrichtung 110 der weiteren Behandlungseinheit 106 übergebbar sind.

Insbesondere sind die Werkstücke 102 mittels einer Übergabestation 210 von einer Hauptförderstrecke 118 der einen Behandlungseinheit 106 auf die Hauptförderstrecke 118 der weiteren Behandlungseinheit 106 übergebbar.

Hierdurch können insbesondere zu wartende und/oder zu reinigende und/oder zu reparierende Behandlungsstationen 114 isoliert umgangen werden, ohne die gesamte Behandlungseinheit 106 temporär stilllegen zu müssen.

Wie insbesondere Fig. 17 ferner zu entnehmen ist, ist bei der in den Fig. 16 bis 18 dargestellten sechsten Ausführungsform der Behandlungsanlage 100 ferner neben der Werkstückbehandlung durch Fluten eine Werkstückbehandlung durch Eintauchen der Werkstücke vorgesehen.

Hierfür sind ein oder mehrere als Tauchbecken 212 ausgebildete Behandlungsbehälter 136 vorgesehen, wobei die zugehörigen Behandlungsstationen 114 der Durchführung von Tauchvorgängen dienen.

Derartige Tauchbecken 212 dienen insbesondere der Beschichtung der Werkstücke 102, beispielsweise der Lackierung derselben im Rahmen einer kathodischen Tauchlackierung.

Insbesondere können mehrere solcher Tauchbecken 212 längs der Hauptförderrichtung 116 aufeinanderfolgend angeordnet sein, beispielsweise nach einer oder mehreren Behandlungsstationen 114 zur Durchführung von Flutvorgängen zur Werkstückvorbehandlung.

Wie insbesondere Fig. 17 zu entnehmen ist, kann es vorgesehen sein, dass einer Behandlungsstation 114 mehrere Fluidtanks 134 und/oder mehrere Gegentanks 196 zugeordnet sind, um in demselben Behandlungsraum 148 verschiedene Behandlungsschritte durchführen zu können.

Der Behandlungsraum 148 ist dann insbesondere alternierend oder nacheinander mit unterschiedlichen Fluiden, insbesondere Behandlungsflüssigkeiten, flutbar.

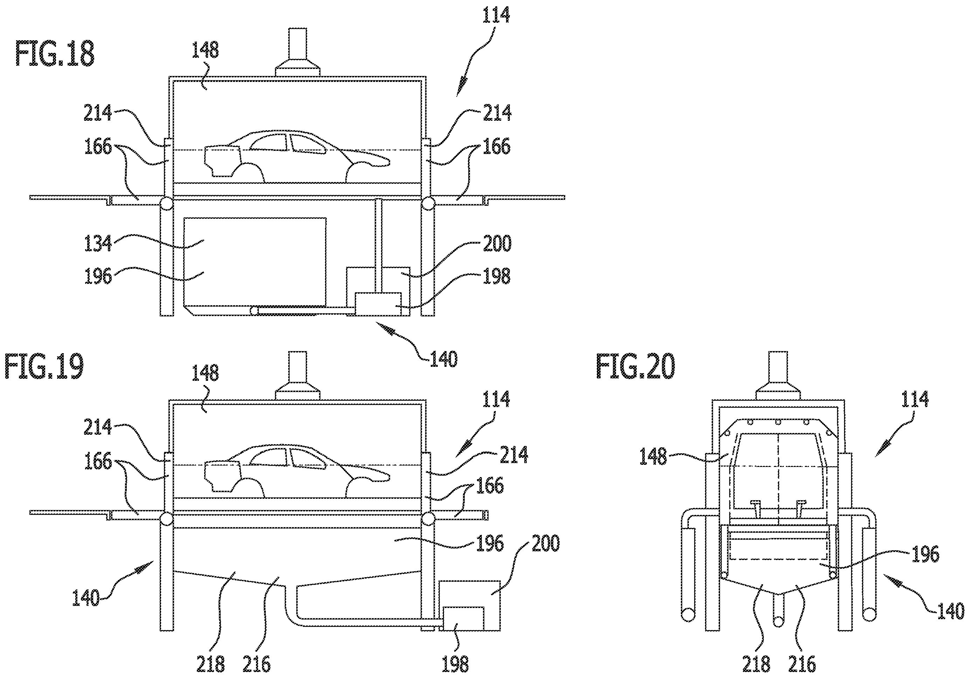

Wie insbesondere aus Fig. 18 hervorgeht, könnten anstelle von als Schleusentoren 172 ausgebildeten Verschließelementen 166 auch Klappelemente 214 als Verschließelemente 166 vorgesehen sein.

Die Klappelemente 214 sind insbesondere um eine im Wesentlichen horizontale Achse schwenkbar angeordnet und dabei zum Verschließen der jeweiligen Zugangsöffnung 158 in eine vertikale Ausrichtung und zum Öffnen der Zugangsöffnung 158 in eine horizontale Ausrichtung bringbar (in Fig. 18 sind beide Zustände eingezeichnet).

Die Verschließelemente 166 können beispielsweise eine nur teilweise Abdeckung der Zugangsöffnung 158 oder aber eine vollständige Abdeckung der Zugangsöffnung 158 bewirken. Bei der in Fig. 18 dargestellten Ausführungsform ist lediglich eine teilweise Abdeckung der Zugangsöffnung 158 vorgesehen, so dass die Behandlungsstation 114 gemäß Fig. 18 lediglich für einen Teilflutvorgang geeignet ist.

Abhängig von dem erforderlichen Füllpegel zur Durchführung der Werkstückbehandlung kann die Dimensionierung des Verschließelements 166 gewählt werden.

Mindestens ein Verschließelement 166, insbesondere mindestens ein Klappelement 214, kann beispielsweise ein oder mehrere Förderelemente einer Fördervorrichtung 110, insbesondere ein oder mehrere Führungselemente einer Führungsvorrichtung 176 einer Fördervorrichtung 110, umfassen oder bilden (in den Figuren nicht dargestellt). Das Verschließelement 166 dient dann insbesondere der lasttragenden Führung des einen oder der mehreren Werkstücke 102 beim Einbringen derselben über das Verschließelement 166 hinweg in den Behandlungsraum 148.

Im Übrigen stimmt die in den Fig. 16 bis 18 dargestellte Ausführungsform der Behandlungsanlage 100 hinsichtlich Aufbau und Funktion mit der in den Fig. 7 bis 12 dargestellten zweiten Ausführungsform überein, so dass auf deren vorstehende Beschreibung insoweit Bezug genommen wird.

In den Fig. 19 und 20 ist eine weitere alternative Ausführungsform einer Behandlungsstation 114 dargestellt, welche im Wesentlichen der in Fig. 18 dargestellten Ausführungsform einer Behandlungsstation 114 entspricht, jedoch einen beispielsweise als Auffangtrichter 216 ausgebildeten Auffangbehälter 218 unterhalb des Behandlungsraums 148 umfasst, mittels welchem das aus dem Behandlungsraum 148 abzuführende Fluid auffangbar ist.

Der Auffangbehälter 218 bildet somit insbesondere einen Gegentank 196 einer Fluidführung 140.

Im Übrigen stimmt die in den Fig. 19 und 20 dargestellte Ausführungsform einer Behandlungsstation 114 hinsichtlich Aufbau und Funktion mit der in Fig. 18 dargestellten Ausführungsform überein, so dass auf deren vorstehende Beschreibung insoweit Bezug genommen wird.

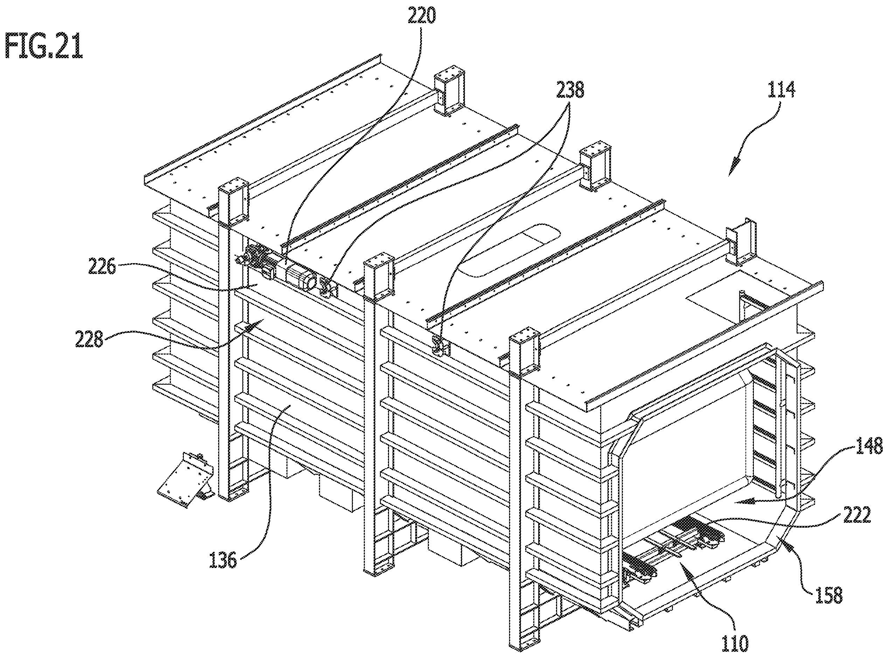

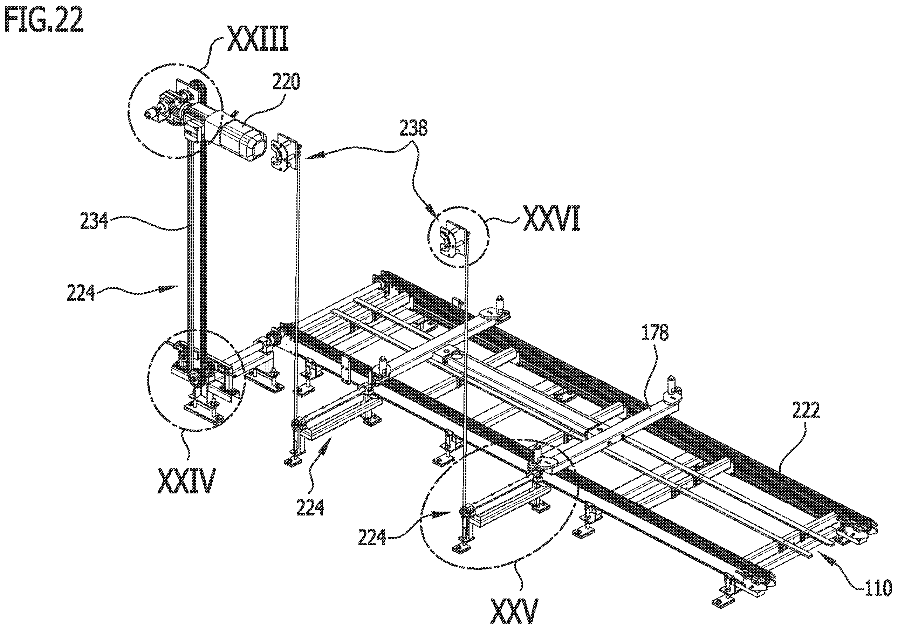

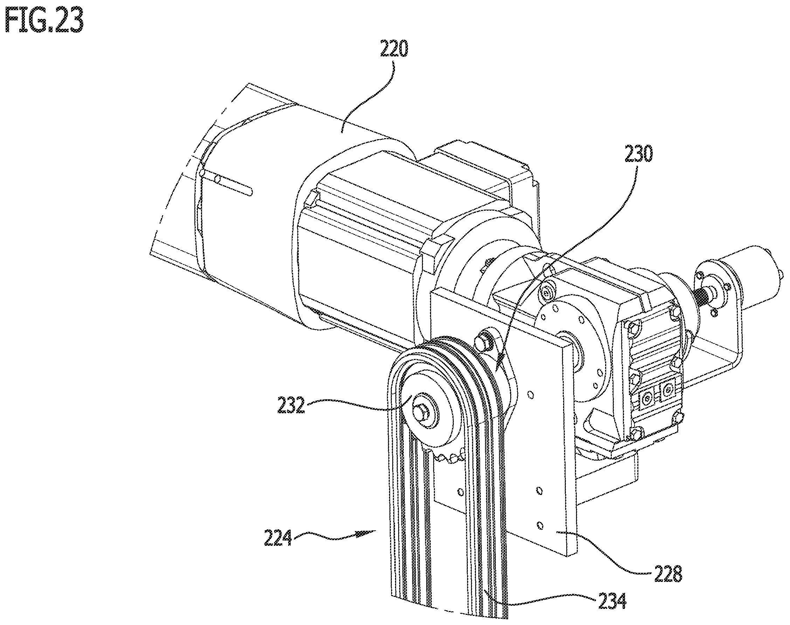

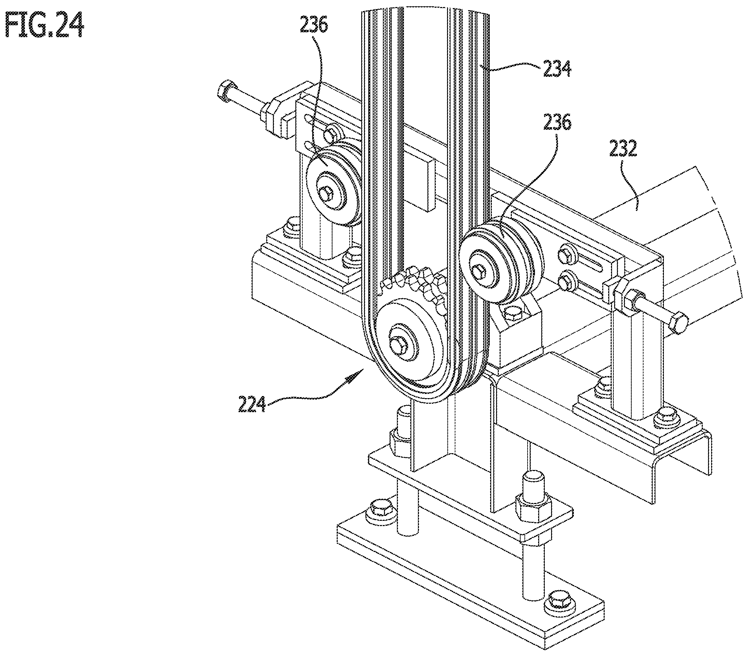

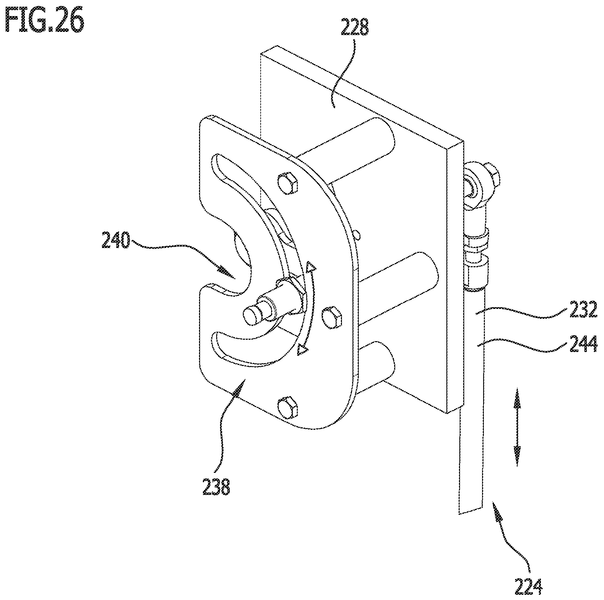

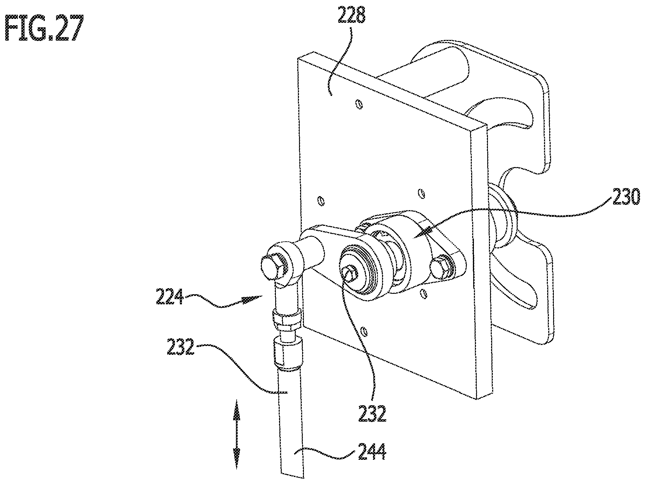

In den Fig. 21 bis 27 ist eine optionale Weiterbildung der Behandlungsstation 114 dargestellt. Hierbei ist vorgesehen, dass die Fördervorrichtung 110 eine oder mehrere Antriebseinheiten 220 umfasst, welche von außerhalb des Behandlungsraums 148 auf einen Führungsstreckenabschnitt 222 der Fördervorrichtung 110 einwirken. Eine Antriebseinheit 220 kann beispielsweise ein Elektromotor sein oder einen Elektromotor umfassen.

Die eine oder die mehreren Antriebseinheiten 220 sind vorzugsweise rein mechanisch mit dem Führungsstreckenabschnitt 222 gekoppelt. Insbesondere kann vorgesehen sein, dass eine Kopplungsvorrichtung 224 eine mechanische Verbindung zwischen der einen oder den mehreren Antriebseinheiten 220 einerseits und dem Führungsstreckenabschnitt 222 der Fördervorrichtung 110 andererseits herstellt. Mittels der außerhalb des Behandlungsraums 148 angeordneten einen oder mehreren Antriebseinheiten 220 ist dann insbesondere ein innerhalb des Behandlungsraums 148 auf dem Führungsstreckenabschnitt 222 geführtes Werkstück 102 antreibbar, vorzugsweise linear verfahrbar, beispielsweise in den Behandlungsraum 148 einbringbar oder aus demselben ausbringbar.

Günstig kann es sein, wenn die eine oder die mehreren Antriebseinheiten 220 oberhalb eines maximalen Füllpegels oder oberhalb einer maximalen Füllhöhe des Behandlungsraums 148 und/oder an einer Außenseite 226 einer Seitenwandung 228 eines den Behandlungsraum 148 umgebenden Behandlungsbehälters 136 angeordnet sind.

Vorzugsweise sind eine oder mehrere Antriebseinheiten 220 an einem einer Zugangsöffnung 158 des Behandlungsbehälters 136 abgewandten Endbereich des Behandlungsbehälters 136 und/oder in einem deckennahen Bereich einer Seitenwandung 228 des Behandlungsbehälters 136 angeordnet.

Die Kopplungsvorrichtung 224 ist vorzugsweise durch die Seitenwandung 228 hindurchgeführt, vorzugsweise auf der Höhe der einen oder der mehreren Antriebseinheiten 220. Eine Durchführungsöffnung 230 zur Durchführung der Kopplungsvorrichtung 224 ist dabei vorzugsweise oberhalb eines maximalen Füllpegels oder oberhalb einer maximalen Füllhöhe des Behandlungsraums 148 angeordnet und/oder ausgebildet. Ein durch die Seitenwandung 228 hindurchgeführtes Koppelelement 232 der Kopplungsvorrichtung 224 ist vorzugsweise eine Drehwelle oder Koppelwelle.

Die Drehwelle oder Koppelwelle ist vorzugsweise mittels eines Zugelements 234, insbesondere mittels eines Riemens und/oder einer Kette, beispielsweise einer Duplexkette, mit einer weiteren Drehwelle oder Koppelwelle verbunden, welche im Bereich des Führungsstreckenabschnitts 222 angeordnet ist und letztlich direkt oder indirekt auf das Werkstück 102 wirkt, um dasselbe anzutreiben. Das Zugelement 234 ist insbesondere mittels einer oder zweier Spannelemente 236, insbesondere Spannrollen, spannbar.

Ferner ist bei der in den Fig. 21 bis 27 dargestellten Ausführungsform vorgesehen, dass die Behandlungsstation 114 eine oder mehrere Sensorvorrichtungen 238 umfasst, welche eine Zustands- und/oder Positionserfassung innerhalb des Behandlungsraums 148 von außerhalb des Behandlungsraums 148 ermöglichen. Beispielsweis kann mittels einer Sensorvorrichtung 238 eine korrekte Positionierung eines Werkstücks 102 innerhalb des Behandlungsraums 148 ermittelt oder überwacht werden.

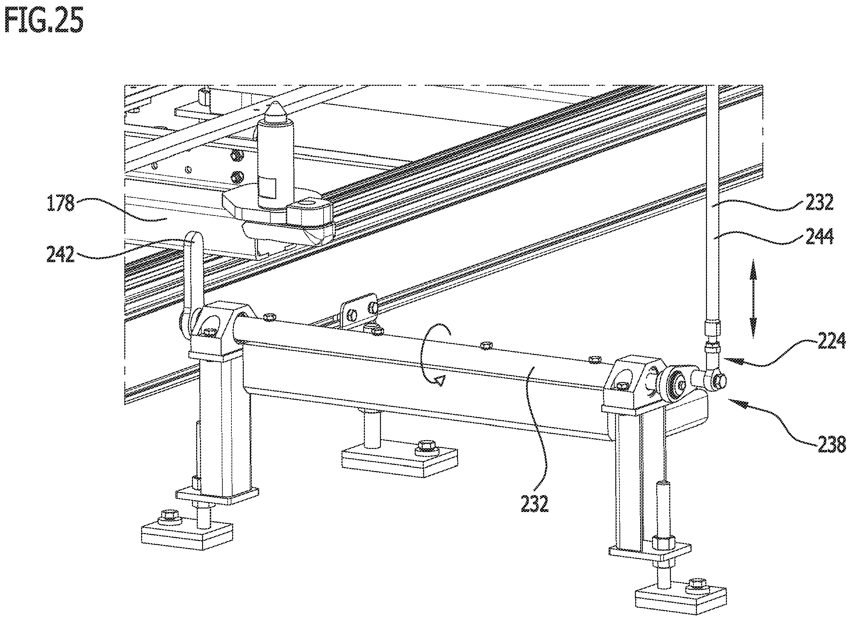

Die eine oder die mehreren Sensorvorrichtungen 238 umfassen vorzugsweise jeweils ein oder mehrere außerhalb des Behandlungsraums 148 angeordnete Sensorelemente 240, welche vorzugsweise rein mechanisch mit einem oder mehreren Geberelementen 242 innerhalb des Behandlungsraums 148 gekoppelt sind (siehe insbesondere die Fig. 25 bis 27). Insbesondere kann vorgesehen sein, dass eine Kopplungsvorrichtung 224 eine mechanische Verbindung zwischen dem einen oder den mehreren Sensorelementen 240 einerseits und dem einen oder den mehreren Geberelementen 242 andererseits herstellt. Mittels des einen oder der mehreren außerhalb des Behandlungsraums 148 angeordneten Sensorelemente 240 ist dann insbesondere ein innerhalb des Behandlungsraums 148 angeordnetes Werkstück 102 detektierbar, vorzugsweise dessen Position ermittelbar oder überwachbar.

Günstig kann es sein, wenn die eine oder die mehreren Sensorelemente 240 oberhalb eines maximalen Füllpegels oder oberhalb einer maximalen Füllhöhe des Behandlungsraums 148 und/oder an einer Außenseite 226 einer Seitenwandung 228 des den Behandlungsraum 148 umgebenden Behandlungsbehälters 136 angeordnet sind.

Vorzugsweise sind ein oder mehrere Sensorelemente 240 in einem deckennahen Bereich einer Seitenwandung 228 des Behandlungsbehälters 136 angeordnet.

Die Kopplungsvorrichtung 224 der Sensorvorrichtung 238 ist vorzugsweise durch die Seitenwandung 228 hindurchgeführt, vorzugsweise auf der Höhe der einen oder der mehreren Sensorelemente 240. Eine Durchführungsöffnung 230 zur Durchführung der Kopplungsvorrichtung 224 ist dabei vorzugsweise oberhalb eines maximalen Füllpegels oder einer maximalen Füllhöhe des Behandlungsraums 148 angeordnet und/oder ausgebildet. Ein durch die Seitenwandung 228 hindurchgeführtes Koppelelement 232 der Kopplungsvorrichtung 224 ist vorzugsweise eine Drehwelle oder Koppelwelle.

Die Drehwelle oder Koppelwelle ist vorzugsweise mittels eines Zugelements oder Druckelements, insbesondere mittels einer Koppelstange 244, mit einer weiteren Drehwelle oder Koppelwelle verbunden, welche beispielsweise in einem Bodenbereich und/oder im Bereich eines Führungsstreckenabschnitts 222 angeordnet ist und mit einem Geberelement 242 verbunden ist. Durch Betätigen des Geberelements 242, beispielsweise durch Drehen des Geberelements 242, kann vorzugsweise eine Rotation der weiteren Drehwelle oder Koppelwelle, dadurch eine beispielsweise vertikale Verschiebung der Koppelstange 244 und hierdurch eine Rotation der (oberen) Drehwelle oder Koppelwelle bewirkt werden, wobei die aus dem Behandlungsraum 148 herausgeführte (obere) Drehwelle oder Koppelwelle schließlich eine Bewegung ausführt oder bewirkt, welche mittels des mindestens einen Sensorelements 240 erfassbar ist. Durch rein mechanische Betätigung der Kopplungsvorrichtung 224 kann somit eine Veränderung der Ausrichtung oder eine sonstige Bewegung des Geberelements 242 mittels des einen oder der mehreren Sensorelemente 240 detektiert werden.

### Bezugszeichenliste

- 100: Behandlungsanlage
- 102: Werkstück
- 104: Fahrzeugkarosserie
- 106: Behandlungseinheit
- 108: Zuführstation
- 110: Fördervorrichtung
- 112: Verteilvorrichtung
- 114: Behandlungsstation
- 116: Hauptförderrichtung
- 118: Hauptförderstrecke
- 120: Tunnelabschnitt
- 122: Reinigungsstation
- 124: Spritzstation
- 126: Spülstation
- 128: Entnahmestation
- 130: Zusammenführungsvorrichtung
- 132: Querausrichtung
- 134: Fluidtank
- 136: Behandlungsbehälter
- 138: Auffangelement
- 140: Fluidführung
- 142: Zuleitung
- 144: Ventilvorrichtung
- 146: Bodenbereich
- 148: Behandlungsraum
- 150: Bodenwand
- 152: Deckenwand
- 154: Seitenwand
- 156: Stirnwand
- 158: Zugangsöffnung
- 160: Einbringöffnung
- 162: Ausbringöffnung
- 164: Verschließvorrichtung
- 166: Verschließelement
- 168: Verschließantrieb
- 170: Hubvorrichtung
- 172: Schleusentor
- 174: Führungsvorrichtung
- 176: Führungsvorrichtung
- 178: Aufnahmevorrichtung
- 180: Skid
- 182: Einbringrichtung
- 184: horizontale Richtung
- 186: Ableitung
- 188: Einbauelement
- 190: Verdrängungselement
- 192: Stützelement
- 194: Zuströmbereich
- 196: Gegentank
- 198: Pumpvorrichtung
- 200: Reinigungsvorrichtung
- 202: Längsausrichtung
- 204: Drehtisch
- 206: Ende
- 208: Querverschubvorrichtung
- 210: Übergabestation
- 212: Tauchbecken
- 214: Klappelement
- 216: Auffangtrichter
- 218: Auffangbehälter
- 220: Antriebseinheit
- 222: Führungsstreckenabschnitt
- 224: Kopplungsvorrichtung
- 226: Außenseite
- 228: Seitenwandung
- 230: Durchführungsöffnung
- 232: Koppelelement
- 234: Zugelement
- 236: Spannelement
- 238: Sensorvorrichtung
- 240: Sensorelement
- 242: Geberelement
- 244: Koppelstange

- g: Schwerkraftrichtung

## Patentansprüche

1. Behandlungsanlage (100) zum Behandeln von Werkstücken (102), umfassend:
mehrere Behandlungsstationen (114) zum Behandeln der Werkstücke (102), insbesondere zum Reinigen und/oder Beschichten von Fahrzeugkarosserien (114), wobei eine oder mehrere Behandlungsstationen (114) jeweils mindestens einen Behandlungsbehälter (136) umfassen, welcher einen Behandlungsraum (148) zur Aufnahme der Werkstücke (102) umgibt,
wobei die Behandlungsanlage (100) eine Fluidführung (140) umfasst, mittels welcher ein oder mehrere der Behandlungsräume (148) wahlweise flutbar oder entleerbar sind,
wobei die Behandlungsanlage (100) eine Fördervorrichtung (110) zum Fördern der Werkstücke (102) umfasst, mittels welcher die Werkstücke (102) in einem entleerten Zustand des jeweiligen Behandlungsraums (148) durch eine als Einbringöffnung (160) ausgebildete Zugangsöffnung (158) in denselben einbringbar und mittels welcher die Werkstücke (102) in einem entleerten Zustand des jeweiligen Behandlungsraums (148) durch eine als Ausbringöffnung (162) ausgebildete Zugangsöffnung (158) aus demselben ausbringbar sind, wobei die Einbringöffnung (160) und die Ausbringöffnung (162) voneinander verschiedene Zugangsöffnungen (158) sind,
**dadurch gekennzeichnet, dass**
die Fördervorrichtung (110) eine oder mehrere Übergabestationen (210) umfasst, an welchen oder mittels welcher die Werkstücke (102) von einer Behandlungsstation (114) wahlweise an eine längs einer Hauptförderrichtung (116) darauffolgende weitere Behandlungsstation (114) derselben Behandlungseinheit (106) und/oder einer hiervon verschiedenen Behandlungseinheit (106) der Behandlungsanlage (100) übergebbar sind.

2. Behandlungsanlage (100) nach Anspruch 1, **dadurch gekennzeichnet, dass** die Werkstücke mittels der Fördervorrichtung (110) längs einer horizontalen Ebene bewegbar, insbesondere in den Behandlungsraum (148) einbringbar und/oder aus dem Behandlungsraum (148) ausbringbar, sind.

3. Behandlungsanlage (100) nach einem der Ansprüche 1 oder 2, **dadurch gekennzeichnet, dass** die Behandlungsanlage (100) eine sich in einer Hauptförderrichtung (116) erstreckende Hauptförderstrecke (118) umfasst, längs welcher die Werkstücke (102) mittels der Fördervorrichtung (110) von einer Behandlungsstation (114) zu einer weiteren Behandlungsstation (114) förderbar sind.

4. Behandlungsanlage (100) nach einem der Ansprüche 1 bis 3, **dadurch gekennzeichnet, dass** die Werkstücke (102) in einer Längsausrichtung (202) derselben längs der Hauptförderrichtung (116) und/oder längs der Hauptförderstrecke (118) förderbar sind.

5. Behandlungsanlage (100) nach einem der Ansprüche 1 bis 4, **dadurch gekennzeichnet, dass** die Werkstücke (102) in einer Längsausrichtung (202) derselben durch einen oder mehrere Behandlungsräume (148) hindurch förderbar sind.

6. Behandlungsanlage (100) nach einem der Ansprüche 1 bis 5, **dadurch gekennzeichnet, dass** die Behandlungsanlage (100) mehrere Behandlungsstationen (114) zur Durchführung von identischen Behandlungsschritten umfasst, wobei zwei oder mehr solcher Behandlungsstationen (114) benachbart zueinander angeordnet sind und/oder Bestandteile von parallel zueinander verlaufenden Behandlungseinheiten (106) oder Behandlungslinien der Behandlungsanlage (100) sind.

7. Behandlungsanlage (100) nach einem der Ansprüche 1 bis 6, **dadurch gekennzeichnet, dass** die Behandlungsanlage (100) eine sich in einer Hauptförderrichtung (116) erstreckende Hauptförderstrecke (118) umfasst, längs welcher die Werkstücke (102) mittels der Fördervorrichtung (110) von einer Behandlungsstation (114) zu einer weiteren Behandlungsstation (114) förderbar sind, wobei die Hauptförderstrecke (118) einen oder mehrere Tunnelabschnitte (120) zur Einhausung der Hauptförderstrecke (118) umfasst, wobei ein oder mehrere Tunnelabschnitte (120), insbesondere ein oder mehrere längs der Hauptförderrichtung (116) zwischen zwei Behandlungsstationen (114) angeordnete Tunnelabschnitte (120), eine Reinigungsstation (122) und/oder Spülstation (126) und/oder Spritzstation (124) aufweisen.

8. Behandlungsanlage (100) nach einem der Ansprüche 1 bis 7, **dadurch gekennzeichnet, dass** eine oder mehrere Reinigungsstationen (122) und/oder Spülstationen (126) und/oder Spritzstationen (124) an einer oder mehreren Übergabestationen (210) angeordnet oder ausgebildet sind.

9. Behandlungsanlage (100) nach einem der Ansprüche 1 bis 8, **dadurch gekennzeichnet, dass** die Behandlungsanlage (100) mindestens zwei Behandlungsstationen (114) zur Durchführung desselben Behandlungsvorgangs umfasst und dass bezüglich einer Hauptförderrichtung (116) der Werkstücke (102) vor und/oder nach diesen Behandlungsstationen (114) eine Verteilervorrichtung (112) bzw. eine Zusammenführungsvorrichtung (130) angeordnet sind.

10. Behandlungsanlage (100) nach Anspruch 9, **dadurch gekennzeichnet, dass** die Verteilervorrichtung (112) und/oder die Zusammenführungsvorrichtung (130) jeweils als Querverschubvorrichtung (208) ausgebildet sind.

11. Behandlungsanlage (100) nach einem der Ansprüche 1 bis 10, **dadurch gekennzeichnet, dass** die Behandlungsanlage (100) eine oder mehrere Behandlungsstationen (114) zur Durchführung von Flutvorgängen und eine oder mehrere Behandlungsstationen (114) zur Durchführung von Tauchvorgängen umfasst.

12. Behandlungsanlage (100) nach Anspruch 11, **dadurch gekennzeichnet,**
**a) dass** die eine oder die mehreren Behandlungsstationen (114) zur Durchführung von Flutvorgängen der Vorbehandlung der Werkstücke (102) dienen, insbesondere der Reinigung, Entfettung und/oder Phosphatierung; und/oder
b) **dass** die eine oder die mehreren Behandlungsstationen (114) zur Durchführung von Tauchvorgängen der Beschichtung der Werkstücke (102) dienen, insbesondere der Lackierung.

13. Verfahren zum Behandeln von Werkstücken (102), insbesondere zum Reinigen und/oder Beschichten von Fahrzeugkarosserien (104), wobei das Verfahren Folgendes umfasst:
Fördern eines oder mehrerer Werkstücke (102) mittels einer Fördervorrichtung (110);
Einbringen des einen oder der mehreren Werkstücke (102) in einen Behandlungsraum (148) einer Behandlungsstation (114) zur Durchführung eines Behandlungsschritts;
Fluten des Behandlungsraums (148) mit einem Fluid;
Entfernen des Fluids und Ausbringen der Werkstücke (102) aus dem Behandlungsraum (148) mittels der Fördervorrichtung (110),
wobei die Werkstücke (102) mittels der Fördervorrichtung (110) in einem entleerten Zustand des jeweiligen Behandlungsraums (148) durch eine als Einbringöffnung (160) ausgebildete Zugangsöffnung (158) in denselben eingebracht und mittels welcher die Werkstücke (102) in einem entleerten Zustand des jeweiligen Behandlungsraums (148) durch eine als Ausbringöffnung (162) ausgebildete Zugangsöffnung (158) aus demselben ausgebracht werden, wobei die Einbringöffnung (160) und die Ausbringöffnung (162) voneinander verschiedene Zugangsöffnungen (158) sind,
**dadurch gekennzeichnet, dass**
die Fördervorrichtung (110) eine oder mehrere Übergabestationen (210) umfasst, an welchen oder mittels welcher die Werkstücke (102) von einer Behandlungsstation (114) wahlweise an eine längs einer Hauptförderrichtung (116) darauffolgende weitere Behandlungsstation (114) derselben Behandlungseinheit (106) und/oder einer hiervon verschiedenen Behandlungseinheit (106) der Behandlungsanlage (100) übergebbar sind.

14. Verfahren nach Anspruch 13, **dadurch gekennzeichnet, dass** die Werkstücke (102) in einer Längsausrichtung (202) derselben längs einer Hauptförderrichtung (116) von einer Behandlungsstation (114) zur nächsten gefördert und in derselben Längsausrichtung (202) durch die Behandlungsräume (148) der Behandlungsstationen (114) hindurch gefördert werden.

## Claims

1. Treatment plant (100) for treating workpieces (102), comprising: a plurality of treatment stations (114) for treating the workpieces (102), in particular for cleaning and/or coating vehicle bodies (114), wherein one or more treatment stations (114) each comprise at least one treatment container (136), which surrounds a treatment chamber (148) for receiving the workpieces (102),
wherein the treatment plant (100) comprises a fluid guide (140), by means of which one or more of the treatment chambers (148) are optionally floodable or emptiable, wherein the treatment plant (100) comprises a conveyor device (110) for conveying the workpieces (102), by means of which, in an empty state of the particular treatment chamber (148), the workpieces (102) are introducible into same through an access opening (158) in the form of an introduction opening (160) and by means of which, in an empty state of the particular treatment chamber (148), the workpieces (102) are dischargeable from same through an access opening (158) in the form of a discharge opening (162), the introduction opening (160) and the discharge opening (162) being access openings (158) which differ from each other, **characterized in that**
the conveyor device (110) comprises one or more transfer stations (210) at which or by means of which the workpieces (102) are transferable from a treatment station (114) either to a further treatment station (114), which follows it along a main conveying direction (116), of the same treatment unit (106) and/or to a treatment unit (106), which differs from it, of the treatment plant (100).

2. Treatment plant (100) according to Claim 1, **characterized in that** the workpieces are movable along a horizontal plane by means of the conveyor device (110), in particular are introducible into the treatment chamber (148) and/or are dischargeable from the treatment chamber (148).

3. Treatment plant (100) according to either of Claims 1 and 2, **characterized in that** the treatment plant (100) comprises a main conveying section (118) which extends in a main conveying direction (116) and along which the workpieces (102) are conveyable by means of the conveyor device (110) from a treatment station (114) to a further treatment station (114).

4. Treatment plant (100) according to any one of Claims 1 to 3, **characterized in that** the workpieces (102) are conveyable in a longitudinal orientation (202) of same along the main conveying direction (116) and/or along the main conveying section (118).

5. Treatment plant (100) according to any one of Claims 1 to 4, **characterized in that** the workpieces (102) are conveyable in a longitudinal orientation (202) of same through one or more treatment chambers (148).

6. Treatment plant (100) according to any one of Claims 1 to 5, **characterized in that** the treatment plant (100) comprises a plurality of treatment stations (114) for carrying out identical treatment steps, two or more such treatment stations (114) being arranged adjacent to each other and/or being components of treatment units (106) running parallel to one another or treatment lines of the treatment plant (100).

7. Treatment plant (100) according to any one of Claims 1 to 6, **characterized in that** the treatment plant (100) comprises a main conveying section (118) which extends in a main conveying direction (116) and along which the workpieces (102) are conveyable by means of the conveyor device (110) from a treatment station (114) to a further treatment station (114), wherein the main conveying section (118) comprises one or more tunnel sections (120) for housing the main conveying section (118), wherein one or more tunnel sections (120), in particular one or more tunnel sections (120) arranged along the main conveying direction (116) between two treatment stations (114) have a cleaning station (122) and/or flushing station (126) and/or spraying station (124).

8. Treatment plant (100) according to any one of Claims 1 to 7, **characterized in that** one or more cleaning stations (122) and/or flushing stations (126) and/or spraying stations (124) are arranged or formed at one or more transfer stations (210).

9. Treatment plant (100) according to any one of Claims 1 to 8, **characterized in that** the treatment plant (100) comprises at least two treatment stations (114) for carrying out the same treatment operation, and **in that** a distributor device (112) and a merging device (130) are arranged upstream and/or downstream of said treatment stations (114) with respect to a main conveying direction (116) of the workpieces (102).

10. Treatment plant (100) according to Claim 9, **characterized in that** the distributor device (112) and/or the merging device (130) are each designed as a transverse displacement device (208).

11. Treatment plant (100) according to any one of Claims 1 to 10, **characterized in that** the treatment plant (100) comprises one or more treatment stations (114) for carrying out flooding operations and one or more treatment stations (114) for carrying out dipping operations.

12. Treatment plant (100) according to Claim 11, **characterized**
a) **in that** the one or more treatment stations (114) are used for carrying out flooding operations for the pre-treatment of the workpieces (102), in particular for cleaning, degreasing and/or phosphating same; and/or
b) **in that** the one or more treatment stations (114) are used for carrying out dipping operations for coating the workpieces (102), in particular for painting same.

13. Method for treating workpieces (102), in particular for cleaning and/or coating vehicle bodies (104), the method comprising the following:
conveying one or more workpieces (102) by means of a conveyor device (110);
introducing the one or more workpieces (102) into a treatment chamber (148) of a treatment station (114) for carrying out a treatment step;
flooding the treatment chamber (148) with a fluid;
removing the fluid and discharging the workpieces (102) from the treatment chamber (148) by means of the conveyor device (110),
wherein, in an empty state of the particular treatment chamber (148), the workpieces (102) are introduced by means of the conveyor device (110) into same through an access opening (158) in the form of an introduction opening (160) and by means of which, in an empty state of the particular treatment chamber (148), the workpieces (102) are discharged from same through an access opening (158) in the form of a discharge opening (162), the introduction opening (160) and the discharge opening (162) being access openings (158) which differ from each other, **characterized in that**
the conveyor device (110) comprises one or more transfer stations (210) at which or by means of which the workpieces (102) are transferable from a treatment station (114) either to a further treatment station (114), which follows it along a main conveying direction (116), of the same treatment unit (106) and/or to a treatment unit (106), which differs from it, of the treatment plant (100).

14. Method according to Claim 13, **characterized in that** the workpieces (102) are conveyed in a longitudinal orientation (202) of same along a main conveying direction (116) from a treatment station (114) to the next and are conveyed in the same longitudinal orientation (202) through the treatment chambers (148) of the treatment stations (114).

## Revendications

1. Installation de traitement (100) pour le traitement de pièces (102), comprenant :
plusieurs postes de traitement (114) pour le traitement des pièces (102), notamment pour le nettoyage et/ou le revêtement de carrosseries de véhicules (114), un ou plusieurs postes de traitement (114) comprenant chacun au moins un récipient de traitement (136) qui entoure un espace de traitement (148) pour recevoir les pièces (102),
l'installation de traitement (100) comprenant un guidage de fluide (140) au moyen duquel un ou plusieurs des espaces de traitement (148) peuvent être inondés ou vidés au choix, l'installation de traitement (100) comprenant un dispositif de transport (110) pour le transport des pièces (102), au moyen duquel les pièces (102), dans un état vidé de l'espace de traitement (148) respectif, peuvent être introduites dans celui-ci par une ouverture d'accès (158) réalisée sous forme d'ouverture d'introduction (160) et au moyen duquel les pièces (102), dans un état vidé de l'espace de traitement (148) respectif, peuvent être évacuées de celui-ci par une ouverture d'accès (158) réalisée sous forme d'ouverture d'évacuation (162), l'ouverture d'introduction (160) et l'ouverture d'évacuation (162) étant des ouvertures d'accès (158) différentes l'une de l'autre,
**caractérisée en ce que**
le dispositif de transport (110) comprend un ou plusieurs postes de transfert (210) au niveau desquels ou au moyen desquels les pièces (102) peuvent être transférées d'un poste de traitement (114), au choix, à une autre poste de traitement (114) de la même unité de traitement (106) et/ou d'une unité de traitement (106) différente de celle-ci de l'installation de traitement (100), situé en aval le long d'une direction de transport principale (116).

2. Installation de traitement (100) selon la revendication 1, **caractérisée en ce que** les pièces peuvent être déplacées le long d'un plan horizontal au moyen du dispositif de transport (110), notamment être introduites dans l'espace de traitement (148) et/ou être évacuées de l'espace de traitement (148).

3. Installation de traitement (100) selon l'une quelconque des revendications 1 ou 2, **caractérisée en ce que** l'installation de traitement (100) comprend une voie de transport principale (118) s'étendant dans une direction de transport principale (116), le long de laquelle les pièces (102) peuvent être transportées au moyen du dispositif de transport (110) d'un poste de traitement (114) à un autre poste de traitement (114).

4. Installation de traitement (100) selon l'une quelconque des revendications 1 à 3, **caractérisée en ce que** les pièces (102) peuvent être transportées dans une orientation longitudinale (202) de celles-ci le long de la direction de transport principale (116) et/ou le long de la voie de transport principale (118).

5. Installation de traitement (100) selon l'une quelconque des revendications 1 à 4, **caractérisée en ce que** les pièces (102) peuvent être transportées dans une orientation longitudinale (202) de celles-ci à travers un ou plusieurs espaces de traitement (148).

6. Installation de traitement (100) selon l'une quelconque des revendications 1 à 5, **caractérisée en ce que** l'installation de traitement (100) comprend plusieurs postes de traitement (114) pour la réalisation d'étapes de traitement identiques, deux ou plus de deux de ces postes de traitement (114) étant agencés de manière adjacente les uns aux autres et/ou faisant partie d'unités de traitement (106) ou de lignes de traitement de l'installation de traitement (100) s'étendant parallèlement les unes aux autres.

7. Installation de traitement (100) selon l'une quelconque des revendications 1 à 6, **caractérisée en ce que** l'installation de traitement (100) comprend une voie de transport principale (118) s'étendant dans une direction de transport principale (116), le long de laquelle les pièces (102) peuvent être transportées au moyen du dispositif de transport (110) d'un poste de traitement (114) à un autre poste de traitement (114), la voie de transport principale (118) comprenant une ou plusieurs sections de tunnel (120) pour enclore la voie de transport principale (118), une ou plusieurs sections de tunnel (120), notamment une ou plusieurs sections de tunnel (120) agencées le long de la direction de transport principale (116) entre deux postes de traitement (114), présentant un poste de nettoyage (122) et/ou un poste de rinçage (126) et/ou un poste de pulvérisation (124).

8. Installation de traitement (100) selon l'une quelconque des revendications 1 à 7, **caractérisée en ce qu'**un ou plusieurs postes de nettoyage (122) et/ou postes de rinçage (126) et/ou postes de pulvérisation (124) sont agencés ou réalisés sur un ou plusieurs postes de transfert (210).

9. Installation de traitement (100) selon l'une quelconque des revendications 1 à 8, **caractérisée en ce que** l'installation de traitement (100) comprend au moins deux postes de traitement (114) pour réaliser une même opération de traitement et **en ce que**, par rapport à une direction de transport principale (116) des pièces (102), un dispositif de répartition (112) ou un dispositif de regroupement (130) sont agencés en amont et/ou en aval de ces postes de traitement (114).

10. Installation de traitement (100) selon la revendication 9, **caractérisée en ce que** le dispositif de distribution (112) et/ou le dispositif de regroupement (130) sont réalisés chacun sous forme de dispositif de poussée transversale (208).

11. Installation de traitement (100) selon l'une quelconque des revendications 1 à 10, **caractérisée en ce que** l'installation de traitement (100) comprend un ou plusieurs postes de traitement (114) pour effectuer des opérations de noyage et un ou plusieurs postes de traitement (114) pour effectuer des opérations d'immersion.

12. Installation de traitement (100) selon la revendication 11, **caractérisée en ce que** a) l'un ou les plusieurs postes de traitement (114) pour l'exécution d'opérations de noyage servent au prétraitement des pièces (102), notamment au nettoyage, au dégraissage et/ou à la phosphatation ; et/ou b) l'un ou les plusieurs postes de traitement (114) servent à effectuer des opérations d'immersion du revêtement des pièces (102), notamment le vernissage.

13. Procédé de traitement de pièces (102), notamment pour le nettoyage et/ou le revêtement de carrosseries de véhicules (104), le procédé comprenant les étapes suivantes :
le transport d'une ou plusieurs pièces (102) au moyen d'un dispositif de transport (110) ;
l'introduction de l'une ou des plusieurs pièces (102) dans un espace de traitement (148) d'un poste de traitement (114) pour effectuer une étape de traitement ;
l'inondation de l'espace de traitement (148) avec un fluide ;
l'élimination du fluide et l'évacuation des pièces (102) de l'espace de traitement (148) au moyen du dispositif de transport (110),
les pièces (102) étant introduites au moyen du dispositif de transport (110) dans l'espace de traitement respectif (148) dans un état vidé de celui-ci à travers une ouverture d'accès (158) réalisée en tant qu'ouverture d'introduction (160) et au moyen duquel les pièces (102) étant évacuées de l'espace de traitement respectif (148) dans un état vidé de celui-ci à travers une ouverture d'accès (158) réalisée en tant qu'ouverture d'évacuation (162), l'ouverture d'introduction (160) et
l'ouverture d'évacuation (162) étant des ouvertures d'accès (158) différentes l'une de l'autre,
**caractérisé en ce que**
le dispositif de transport (110) comprend un ou plusieurs postes de transfert (210) au niveau desquels ou au moyen desquels les pièces (102) peuvent être transférées d'un poste de traitement (114), au choix, à une autre poste de traitement (114) de la même unité de traitement (106) et/ou d'une unité de traitement (106) différente de celle-ci de l'installation de traitement (100), situé en aval le long d'une direction de transport principale (116).

14. Procédé selon la revendication 13, **caractérisé en ce que** les pièces (102) sont transportées dans une orientation longitudinale (202) de celles-ci le long d'une direction de transport principale (116) d'un poste de traitement (114) au suivant et sont transportées dans la même orientation longitudinale (202) à travers les espaces de traitement (148) des postes de traitement (114).
